(19)

Europäisches
Patentamt
European
Patent Office
Office européen
des brevets

(11) **EP 3 570 242 B1**

(12) **EUROPEAN PATENT SPECIFICATION**

(45) Date of publication and mention
of the grant of the patent:
**26.11.2025   Bulletin 2025/48**

(21) Application number: **19175132.0**

(22) Date of filing: **17.05.2019**

(51) International Patent Classification (IPC):
**G06Q 30/0201** *(2023.01)*    **G06Q 10/0639** *(2023.01)*

(52) Cooperative Patent Classification (CPC):
**G06Q 30/0201; G06Q 10/06393**

(54) **METHOD AND SYSTEM FOR QUANTIFYING QUALITY OF CUSTOMER EXPERIENCE (CX) OF AN APPLICATION**

VERFAHREN UND SYSTEM ZUR QUANTIFIZIERUNG DER QUALITÄT DER KUNDENERFAHRUNG (CX) EINER ANWENDUNG

PROCÉDÉ ET SYSTÈME PERMETTANT DE QUANTIFIER LA QUALITÉ D'EXPÉRIENCE CLIENT (CX) D'UNE APPLICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2018   IN 201821018541**

(43) Date of publication of application:
**20.11.2019   Bulletin 2019/47**

(73) Proprietor: **Tata Consultancy Services Limited Maharashtra (IN)**

(72) Inventors:
• **VENKADESAVARALU, Vimal Anand**
  **600096 Chennai, Tamil Nadu (IN)**
• **UMAYAL PURAM SRINIVASARAGHAVAN, Dhasuruthe**
  **600096 Chennai, Tamil Nadu (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2017 244 777     US-A1- 2018 048 527**

• **RAVIART DOMINIQUE: "TCS' CX Assurance Platform: a Bold Ambition for Digital Testing", 19 July 2018 (2018-07-19), pages 1 - 2, XP055873622, Retrieved from the Internet <URL:https://research.nelson-hall.com/sourcing-expertise/it-services/?avpage-views=blog&type=post&post_id=841> [retrieved on 20211216]**

**Description**

CROSS-REFERENCE TO RELATED APPLICATIONS AND PRIORITY

The present application claims priority from Indian Patent Application No. (201821018541), filed in India on May 17, 2018.

TECHNICAL FIELD

The disclosure herein generally relates to quality of Customer Experience (CX) of applications, and, more particularly, relates to computing CX rating for web applications and/or mobile applications

BACKGROUND

Adoption of digital technologies has enabled organizations exponentially increase business volumes through online channels such as web platforms and mobile platforms. This has been further supported by increasing usage of personal digital devices in the form of mobile, tablet and laptops. Proliferation of the digital devices have increased opportunities to drive sales, where applications that run on the digital devices are one of the means that connect the organization or entity associated with the application and the end user. The experience of the end user while browsing or using the application is critical for impact the application makes on the user and effectively to the organization. Thus, knowing the quality of customer experience (CX) is important to understand the impact of the application on the customer or the end user and accordingly bring in changes to enhance the impact or CX.

Many existing approaches attempt to capture the quality of CX. An existing method focusses on quality experience (QX) with network perspective. Few existing methods deal with customer experience providing end user perspective but at a broad level without dealing with measuring or quantifying the quality of CX. Further, CX with end user perspective has many attributes or performance parameters and knowledge of CX corresponding to one attribute does not reveal the true picture of CX quality. However, most of the methods in art discuss on one aspect, thus have limitation in the CX analysis offered, which may fail to consider the effect of other attributes. Further, the CX in the art is focused on qualitative analysis and not quantitative. For example, an existing Real user monitoring (RUM) method focusses only on performance dimension and collects performance specific attributes at the browser-level, projecting as a means to monitor end-user experience. However, the existing RUM does not provide a process to consume the collected attributes to provide further insights on performance of application. The press release by Dominique Raviart: "TCS' CX Assurance Platform: a Bold Ambition for Digital Testing", 19 July 2018 (2018-07-19), pages 1-2, XP055873622, Internet: URL:https://research.nelson-hall.com/sourcing-expertise/it-services/?avpage-views=blog&type=post&post_id=841, relates to CX Assurance Platform (CXAP), which is combining a focus on digital testing along with security and performance testing. CXAP is focusing on a web application's five key attributes: compatibility, usability, security, accessibility, and performance (CUSAP). Compatibility testing is based on the automated comparison of screens, using most-used browsers. Usability testing relies on TCS guidelines for page presentation, content, interaction, and website navigation. Security testing is structured around the OWSAP's top ten vulnerabilities. Accessibility testing is based on the Web Content Accessibility Guidelines (WCAG) 2.0. Performance testing benchmarks are from an end-user perspective (the web application's performance).

SUMMARY

Embodiments of the present disclosure present technological improvements as solutions to one or more of the above-mentioned technical problems recognized by the inventors in conventional systems. The invention is set out in the appended set of claims.

For example, in one aspect, there is provided a processor implemented method for quantifying quality of Customer Experience (CX) for an application. The method comprises analyzing, by the processor, the application to compute a browser compatibility (C)-rating, a usability (U)-rating, an application security (S)-rating, an accessibility (A)-rating and an application performance (P)-rating providing quantified CX associated with C, U , S, A and P dimensions of the application. The C-rating of the application is based on comparison of a plurality of pages of the application across a plurality of browsers, selected based on market share of each of the plurality of browsers, to identify anomalies, wherein the C-rating is obtained using a Gaussian standard normal distribution by mapping a compatibility coverage of the application against a C-truth table comprising of a historical cumulative compatibility coverage percentages of a plurality of applications analyzed prior to the application. The P-rating of the application is based on measurement of a plurality of performance attributes of the application as perceived by an end-user, wherein a scoring scheme for each of the performance attributes among the plurality of performance attributes is obtained using a weightage coefficient of each performance attribute calibrated based on a plurality of requirements specific to the application and the Gaussian standard normal distribution by mapping each performance attribute against a P-truth table comprising a range of historical values of each performance attribute collected by regular polling multiple applications. The A-rating of the application is based on validation of a plurality of entities on the pages of the application to be complying with a list of accessibility standards and guidelines weighted based on a plurality of statutory needs, a complexity of implementation and an end user-impact, wherein the A-rating is obtained using the Gaussian standard normal distribution by mapping an accessibility coverage of the application against an A-truth table comprising a historical accessibility coverage of the plurality of applications analyzed prior to the application. The U-rating of the application is based on validation of the plurality of entities on the pages of the application to be complying with a list of usability guidelines weighted based on the end-user impact and applicability to implementation approach of the application, wherein the U-rating is obtained using the Gaussian standard normal distribution by mapping an usability coverage of the application against a U-truth table comprising a historical accessibility coverage of the plurality of applications analyzed prior to the application. The S-rating of the application is based on validation of the application to be resilient against a list of security vulnerabilities prevalent, weighted based on impact of the security vulnerabilities on organization and the probability of occurrence of the security vulnerabilities, wherein the S-rating is obtained using the Gaussian standard normal distribution by mapping a cumulative security risk score of the application against an S-truth table comprising a historical cumulative weighted security risk scores of the plurality of applications analyzed prior to the application. Further, the method comprises computing, by the processor a cumulative CX-rating of the application by allocating weightage coefficients to each of the C-rating, the U-rating, S-rating, the A-rating and the P-rating based on the plurality of requirements specific to the application; and aggregating the weighted C-rating, the weighted U-rating, the weighted S-rating, the weighted A-rating and the weighted P-rating based on a predefined function to compute the cumulative CX-rating.

In another aspect, there is provided a system for quantifying quality of Customer Experience (CX) for an application. The system comprises a memory storing instructions; one or more Input/Output (I/O) interfaces; and one or more processors coupled to the memory via the one or more I/O interfaces. The processor is configured by the instructions to analyze the application to compute a browser compatibility (C)-rating, a usability (U)-rating, an application security (S)-rating, an accessibility (A)-rating and an application performance (P)-rating providing quantified CX associated with C, U , S, A and P dimensions of the application. The C-rating of the application is based on comparison of a plurality of pages of the application across a plurality of browsers, selected based on market share of each of the plurality of browsers, to identify anomalies, wherein the C-rating is obtained using a Gaussian standard normal distribution by mapping a compatibility coverage of the application against a C-truth table comprising of a historical cumulative compatibility coverage percentages of a plurality of applications analyzed prior to the application. The P-rating of the application is based on measurement of a plurality of performance attributes of the application as perceived by an end-user, wherein a scoring scheme for each of the performance attributes among the plurality of performance attributes is obtained using a weightage coefficient of each performance attribute calibrated based on a plurality of requirements specific to the application and the Gaussian standard normal distribution by mapping each performance attribute against a P-truth table comprising a range of historical values of each performance attribute collected by regular polling multiple applications. The A-rating of the application is based on validation of a plurality of entities on the pages of the application to be complying with a list of accessibility standards and guidelines weighted based on a plurality of statutory needs, a complexity of implementation and an end user-impact, wherein the A-rating is obtained using the Gaussian standard normal distribution by mapping an accessibility coverage of the application against an A-truth table comprising a historical accessibility coverage of the plurality of applications analyzed prior to the application. The U-rating of the application is based on validation of the plurality of entities on the pages of the application to be complying with a list of usability guidelines weighted based on the end-user impact and applicability to implementation approach of the application, wherein the U-rating is obtained using the Gaussian standard normal distribution by mapping an usability coverage of the application against a U-truth table comprising a historical usability coverage of the plurality of applications analyzed prior to the application. The S-rating of the application is based on validation of the application to be resilient against a list of security vulnerabilities prevalent, weighted based on impact of the security vulnerabilities on organization and the probability of occurrence of the security vulnerabilities, wherein the S-rating is obtained using the Gaussian standard normal distribution by mapping a cumulative security risk score of the application against an S-truth table comprising a historical cumulative weighted security risk scores of the plurality of applications analyzed prior to the application. Further, the processor is configured to compute a cumulative CX-rating of the application by allocating weightage coefficients to each of the C-rating, the U-rating, S-rating, the A-rating and the P-rating based on the plurality of requirements specific to the application; and aggregating the weighted C-rating, the weighted U-rating, the weighted S-rating, the weighted A-rating and the weighted P-rating based on a predefined function to compute the cumulative CX-rating.

In yet another aspect, there are provided one or more non-transitory machine readable information storage mediums comprising one or more instructions which when executed by one or more hardware processors cause analyzing an application to compute a browser compatibility (C)-rating, a usability (U)-rating, an application security (S)-rating, an accessibility (A)-rating and an application performance (P)-rating providing quantified CX associated with C, U , S, A and P dimensions of the application. The C-rating of the application is based on comparison of a plurality of pages of the application across a plurality of browsers, selected based on market share of each of the plurality of browsers, to identify anomalies, wherein the C-rating is obtained using a Gaussian standard normal distribution by mapping a compatibility coverage of the application against a C-truth table comprising a historical cumulative compatibility coverage percentages of a plurality of applications analyzed prior to the application. The P-rating of the application is based on measurement of a plurality of performance attributes of the application as perceived by an end-user, wherein a scoring scheme for each of the performance attributes among the plurality of performance attributes is obtained using a weightage coefficient of each performance attribute calibrated based on a plurality of requirements specific to the application and the Gaussian standard normal distribution by mapping each performance attribute against a P-truth table comprising a range of historical values of each performance attribute collected by regular polling multiple applications. The A-rating of the application is based on validation of a plurality of entities on the pages of the application to be complying with a list of accessibility standards and guidelines weighted based on a plurality of statutory needs, a complexity of implementation and an end user-impact, wherein the A-rating is obtained using the Gaussian standard normal distribution by mapping an accessibility coverage of the application against an A-truth table comprising a historical accessibility coverage of the plurality of applications analyzed prior to the application. The U-rating of the application is based on validation of the plurality of entities on the pages of the application to be complying with a list of usability guidelines weighted based on the end-user impact and applicability to implementation approach of the application, wherein the U-rating is obtained using the Gaussian standard normal distribution by mapping an usability coverage of the application against a U-truth table comprising a historical usability coverage of the plurality of applications analyzed prior to the application. The S-rating of the application is based on validation of the application to be resilient against a list of security vulnerabilities prevalent, weighted based on impact of the security vulnerabilities on organization and the probability of occurrence of the security vulnerabilities, wherein the S-rating is obtained using the Gaussian standard normal distribution by mapping a cumulative security risk score of the application against an S-truth table comprising a historical cumulative weighted security risk scores of the plurality of applications analyzed prior to the application. Further, computing a cumulative CX-rating of the application by allocating weightage coefficients to each of the C-rating, the U-rating, S-rating, the A-rating and the P-rating based on the plurality of requirements specific to the application; and aggregating the weighted C-rating, the weighted U-rating, the weighted S-rating, the weighted A-rating and the weighted P-rating based on a predefined function to compute the cumulative CX-rating.

It is to be understood that both the foregoing general description and the following detailed description are exemplary and explanatory only and are not restrictive of the invention, as claimed.


BRIEF DESCRIPTION OF THE DRAWINGS

The accompanying drawings, which are incorporated in and constitute a component of this disclosure, illustrate exemplary embodiments and, together with the description, serve to explain the disclosed principles:

FIG. 1 illustrates an exemplary block diagram of a system for quantifying quality of Customer Experience (CX) of an application, in accordance with an embodiment of the present disclosure.
FIG. 2 is a flow diagram illustrating steps of a method for quantifying the quality of CX of the application using the system of FIG. 1, in accordance with an embodiment of the present disclosure.
FIG. 3 through FIG. 7 are flow diagrams illustrating steps of methods for computing a browser compatibility (C)-rating, a usability (U)-rating, an application security (S)-rating, an accessibility (A)-rating and an application performance (P)-rating providing quantified CX quality associated with C, U, S, A and P dimensions of the application, in accordance with an embodiment of the present disclosure.


DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

Quality of Customer Experience (CX) is dependent on various dimension of non-functional parameters and influenced by standards, usage patterns for a particular application such as a web application or a mobile application, which can change in real-time. Hence, quality of the CX in terms of a quantified value or score can provide necessary insights for comparative analysis of performance of an application of interest. Embodiments herein provide a method and system for quantifying the quality of CX for an application in terms of non-functional parameter such as browser compatibility (C), usability (U), application security (S), accessibility (A) and application performance (P). There are two aspects to the quality of the application, alternatively referred as digital application. One is a functional quality, which primarily focuses on the correctness of implementation of features envisaged to be offered by an implementation team.

Second is a non-Functional quality, focuses on multiple attributes or dimensions, which increase the overall experience of the implemented application. For example, performance throughput, compatibility across various browsers in the market, compliance against statutory guidelines in areas such as accessibility, security, wherein the method disclosed captures these non-functional aspects in terms of the C, U, A, S and P dimensions. Scope and definition of each of the C,U,S,A and P dimensions are provided below:

Browser Compatibility (C) - Defect weightage derived based on market share that the browsers maintains, browser compatibility coverage of various players in the market, and the volume of defects encountered.

Accessibility (A) - Driven by non-compliances observed during evaluation of objective guidelines published by various statutory agencies and industry consortiums such as W3C - WCAG (Level A, Level AA and Level AAA) along with comparison of the compliance level of various players in the market.

Application Performance (P) - Performance parameters, alternatively referred as performance attributes, that are non-intrusive and scoring based on comparison with industry benchmark that is computed and established by the method disclosed herein

Usability (U) - Scoring based on level of objective usability effectiveness validated on the key user heuristics classified by Navigation, Content, Presentation and Interaction. This could also include validation of compliance to Responsive Web Design (RWD) to enable increased usability across devices of varied resolutions

Application Security (S) - Driven by validating fallouts from non-intrusive vulnerabilities from recognized industry bodies such as Open Web Application Security Project (OWASP) with scoring calculation derived based on business impact and probability of occurrence.

Upon determining individual CX rating in all the C, U, A, S and P, alternatively referred as CUSAP, dimensions, further, the method enables computing a cumulative CX rating that provides a cumulative effect of individual CX rating computed for all non-functional parameters. For example, unlike existing Real User Monitoring (RUM) approaches that focus only on performance dimension of an application and few other existing approaches that focus individually on only one dimension without dealing with quantifying the CX quality at least in that specific dimension being analyzed, the method disclosed analyzes the application from multiple dimensions such as the C, U, A, S and P (CUSAP) to arrive at a view of the application's standing with respect to its industry peers. Further, the method disclosed rates the quality of CX based on weightage of each of the individual dimensions referred as the CUSAP, providing 360 degree CX rating or performance evaluation of the application with the end user perspective. The method disclosed also combines the individual rating in the CUASP dimension providing the cumulative performance evaluation. The cumulative CX rating is weighted aggregation of each of the individual ratings with weightage based on specific application needs. Thus method disclosed enables providing application specific ratings and not a generic rating method. Each of the individual CX rating and the cumulative CX rating enables an organization or an application owner to understand the overall impact of the specific application of interest being analyzed and accordingly modify the specific application to the best interest of the organization.

Furthermore, the individual CX ratings evaluated or computed for all application being analyzed in accordance with the disclosed method are stored and used as historical data while computing the individual CX ratings of next new application in queue. This aspect of consideration of historical data brings in dynamicity in computing the individual CX ratings, effectively capturing the trend observed.

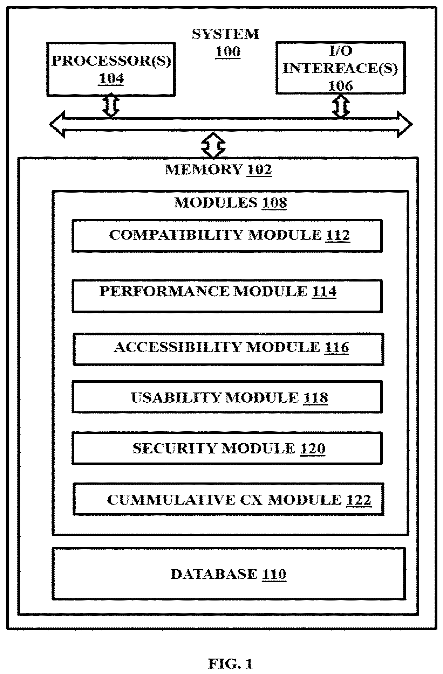

Referring now to the drawings, and more particularly to FIGS. 1 through 7, where similar reference characters denote corresponding features consistently throughout the figures, there are shown preferred embodiments and these embodiments are described in the context of the following exemplary system and/or method.

FIG. 1 illustrates an exemplary block diagram of a system 100 for quantifying the quality of Customer Experience (CX) of the application, in accordance with an embodiment of the present disclosure.

In an embodiment, the system 100 includes one or more processors 104, communication interface device(s) or input/output (I/O) interface(s) 106, and one or more data storage devices or memory 102 operatively coupled to the one or more processors 104 via a bus. The one or more processors 104 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server. The I/O interface 106, through the ports, is configured to receive inputs such as external data collected by an application crawler, a market listener, an accessibility crawler, a polling agent and other modules of memory 102.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 110 can be stored in the memory 102, wherein the database 110 may comprise, but not limited to, the input data collected by the application crawler, the market listener, the accessibility crawler and the polling agent.

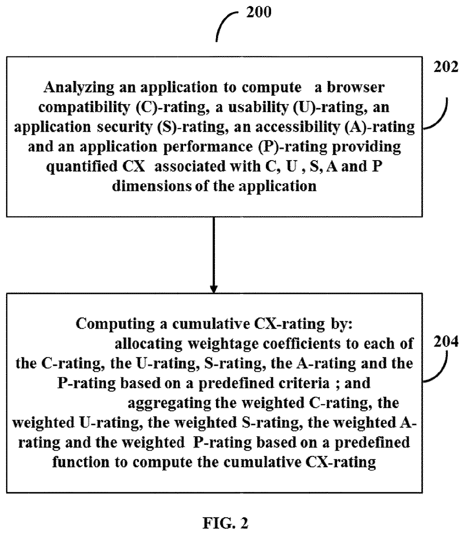

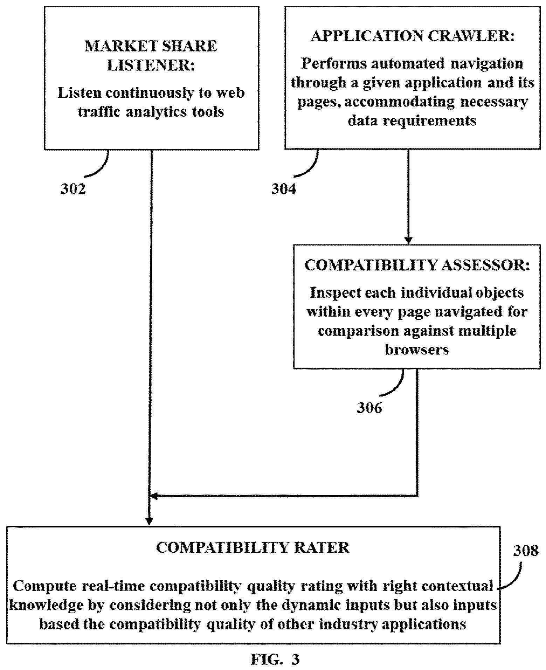

In an embodiment a plurality of modules 108 can be stored in the memory 102, wherein the modules 108 may comprise a compatibility module 112, a performance module 114, an accessibility module 116, a usability module 118, a security module 120 and a cumulative CX module 122. The modules 108, when executed by the processors (s) 104 are configured to analyze the application being monitored for computing the (C)-rating, the U-rating, the S-rating, the A-rating and the P-rating providing quantified CX associated with the CUSAP dimensions. Once the ratings for CUSAP are computed, the system 100 is configured to compute the cumulative CX-rating. The functions of the modules 108 are explained in conjunction with a method 200 of FIG. 2 and methods depicted in FIGs3 through 7 for computing individual ratings in the CUSAP dimension. The memory 102 may further comprise information pertaining to input(s)/output(s) of each step performed by the modules 108 of the system 100 and methods of the present disclosure.

FIG. 2 is a flow diagram illustrating steps of a method for quantifying the quality of CX of the application using the system of FIG. 1, in accordance with an embodiment of the present disclosure. In an embodiment, the system 100 comprises one or more data storage devices or the memory 102 operatively coupled to the one or more processors 104 and is configured to store instructions for execution of steps of the method 200 by the one or more processors (alternatively referred as processor(s)) 104 in conjunction with various modules of the modules 108. The steps of the method 200 of the present disclosure will now be explained with reference to the components or blocks of the system 100 as depicted in FIG. 1 and the steps of flow diagram as depicted in FIG. 2 through 7. Although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method 200, the compatibility module 112, the an accessibility module 114, the performance module 116, the usability module 118 and the security module 120 when executed by the processors (s) 104 are configured to analyze the application being monitored for computing the C-rating, the U-rating, the S-rating, the A-rating and the P-rating providing quantified CX associated with CUSAP dimensions of the application.

Upon computing the individual ratings for CUSAP dimensions of the application, as explained in conjunction with FIGs. 3 through 7, then at step 204 of the method 200, the cumulative CX module 122 when executed by the processors (s) 104 is configured to compute the cumulative CX-rating by allocating weightage coefficients to each of the C-rating, the U-rating, S-rating, the A-rating and the P-rating based on criteria the plurality of requirements specific to the application. For example, a bank application has higher focus or weightage on security or (S) dimension than a travel and leisure application. For the travel application, the weightage may be on the compatibility of browser or the C dimension. Further, the weighted C-rating, the weighted U-rating, the weighted S-rating, the weighted A-rating and the weighted P-rating are aggregated based on a predefined function to compute the cumulative CX-rating.

The dimensions, CUSAP, and characteristics of the CX are described in table below:

**TABLE 1**

| Dim | Indicates | How | Description | Range |
|-----|-----------|-----|-------------|-------|
| C | How well an application is compatible | Scan individual pages of a web application between the base-browser for | Takes into consideration the following parameters for calculating the com-patibility rating: | 1-5 |

(continued)

| Dim | Indicates | How | Description | | Range |
|---|---|---|---|---|---|
| | with the top browsers in the industry | which it has been developed, against the top five industry browsers. | | • Real-time market share of various browsers in the industry | |
| | | | | • Number of pages that needs to be navigated across the application | |
| | | | | • Base browser on which the application was built | |
| | | | | • Compatibility rating (or coverage) of multiple other applications in the industry | |
| | | | | • Number of pages with issues on each of the browser | |
| | | | Delivers a coverage score of 1-5 (5 being the best) by normalizing the coverage level of the application under test against multitude of samples collected from the market to fit the | | |
| | | | compatibility level against peers in the industry. | | |
| A | An application's compliance to statutory and industry guidelines for accessibility e.g. WCAG (Levels A, AA, AAA). | Validates individual components of specific pages for their compliance to various industry specific guidelines. | Following attributes are considered for calculation of accessibility rating: | | 1-5 |
| | | | | • Dynamically updated statutory and industry guidelines. For e.g., in case of WCAG - Level A, AA & AAA | |
| | | | | • Applicability of a guideline to the application under test | |
| | | | | • No. of issue identified against each guideline | |
| | | | | • Weightage of individual guidelines based on considerations such as end-user impact, implementation complexity etc. | |
| | | | | • Accessibility compliance of various other applications in the industry | |
| | | | Delivers an accessibility score of 1-5 (5 being the best) by normalizing the coverage level of the application under test against multitude of samples collected from the market to fit the compatibility level against peers in the industry. | | |
| P | The performance levels of an application against best players across various business domains | Comparison of end-user facing performance parameters such as Time to First Byte (TTFB), Load Time (LT), First Visual Change (FVC),Full Load Time (FLT) etc. against the top | The performance rating is computed based on the following considerations: | | 1-5 |
| | | | | • End-user impacting performance parameters of an application such as Time to First Byte, Load Time, First Visual | |

(continued)

| Dim | Indicates | How | Description | Range |
|-----|-----------|-----|-------------|-------|
| S | (e.g. Retail, Insurance and Banking) and geographies. | industry players based on considerations such as user-base, revenue, industry domain etc. | Change, Full Load Time etc.<br>• End-user performance of various other applications in the industry (measured by establishing a baseline through continuous polling of aforementioned parameters of multiple industry leading applications)<br>Delivers a performance score of 1-5 (5 being the best) by normalizing the performance levels of the application under test against multitude of samples collected from the market to fit the performance level against peers in the industry. | |
| S | The security level of an application in accordance to industry bodies and communitie s such as OWASP (which regularly releases the set of most critical application security risks) | Validation of security test cases chosen from list of vulnerabilities released by industry bodies such as the OWASP (Top 10) application security risks across areas covering authentication, configuration management, authorization, session management, client side attack, XSS, insecure transmission, injection etc. | The Security Rating is calculated based on a risk score which is computed based on the following considerations for each of the vulnerability categories - Authentication, Configuration Mgmt., Authorization, Session Mgmt., Client Side Attack, XSS, Insecure Transmission, Injection. This is done considering following factors:<br>• List of top security vulnerabilities prevalent in the industry e.g. OWASP Top 10<br>• Applicability of a vulnerability to an application | 1-5 |
| | | | • Severity of vulnerabilities based on considerations such as business impact and possibility of occurrence<br>• Security quality levels of various other applications in the industry<br>Delivers a security score of 1-5 (5 being the best) by normalizing the security levels of the application under test against multitude of samples collected from the market to fit the security level against peers in the industry. | |
| U | The basic ease of an application | Validation of objective usability guidelines aligned to | A usability score is calculated after validation of web pages of an application | 1-5 |

(continued)

| Dim | Indicates | How | Description | Range |
|---|---|---|---|---|
| | under selective aspects pertinent to - Navigation, Content, Presentation and Interaction | industry standards such as ISA-HMI, ISO 9241-11 across multiple application pages to ascertain its ease of use across dimensions of - Navigation, Content, Presentation, and Interaction (NCPI). | for aspects covering dimensions of NCPI. Following are the key considerations for arriving at the score: <br>• List of usability guidelines derives from various industry guidelines such as ISA-HMI, ISO 9241-11 <br>• Applicability of the guideline to an application <br>• Weightage of individual guidelines (based on impact it has on the end-user accomplishing a specific task) <br>• Usability quality levels of various other applications in the industry | |
| | | | Delivers a usability score of 1-5 (5 being the best) by normalizing the usability quality levels of the application under test against multitude of samples collected from the market to fit the usability quality level against peers in the industry. | |
| Cum mula tive CX | The overall customer experience quality of a digital application based on the dimensions of CUSAP | Weighted augmentation of various CUSAP ratings calculated in consideration to multiple dynamic and static attributes (e.g. market share, industry standards, guidelines) and normalized standing of the CX quality level against peers in the industry | Following are the key considerations for arriving at an overarching customer experience rating (CX Rating): <br>• "Real-Time Ratings" from Individual Dimensions - CUSAP <br><br>• Weightage of each of the individual CX dimensions | 1-5 |

In an example embodiment, each of the individual CX ratings are computed to lie within a range of 0-5. Further, higher the value of the range associated with the respective individual CX ration better is the application in that dimension of customer experience.

The C-rating of the application is based on comparison of a plurality of pages of the application across a plurality of browsers, selected based on market share of each of the plurality of browsers, to identify anomalies. The C-rating is obtained using a Gaussian standard normal distribution by mapping a compatibility coverage of the application against a C-truth table comprising of a historical cumulative compatibility coverage percentages of a plurality of applications analyzed prior to the application.

The P-rating of the application is based on measurement of a plurality of performance attributes of the application as perceived by an end-user. A scoring scheme for each of the performance attributes among the plurality of performance attributes is obtained using a weightage coefficient of each performance attribute calibrated based on a plurality of requirements specific to the application and Gaussian standard normal distribution by mapping each performance attribute against a P-truth table comprising a range of historical values of each performance attribute collected by regular polling multiple applications. The plurality of requirements specific to the application in context of P-rating, for example, can be First Visual Change (FVC), which has a precedence over Full Load Time. The reason is that FVC might carry a higher weightage since it is a duration by which an end-user is able to see the first visual change on his/her screen when the page loads in the browser. Full Load Time (FLT) could carry a lesser weightage since it signifies the duration between the start of the initial navigation, up until there was 2 seconds of no network activities after the page is loaded (Load Time). These decisions can be taken by the organization or owners of the application based on their requirements.

The A-rating of the application is based on validation of a plurality of entities on the pages of the application to be complying with a list of accessibility standards and guidelines weighted based on a plurality of statutory needs, a complexity of implementation and an end user-impact. The A-rating is obtained using the Gaussian standard normal distribution by mapping the accessibility coverage of an application against a A-truth table comprising a historical accessibility coverage of the plurality of applications analyzed prior to the application.

The U-rating of the application is based on validation of the plurality of entities on the pages of the application to be complying with a list of usability guidelines weighted based on the end-user impact and applicability to implementation approach of the application. The U-rating is obtained using the Gaussian standard normal distribution by mapping the usability coverage of an application against a U-truth table comprising a historical usability coverage of the plurality of applications analyzed prior to the application; and

The S-rating of the application is based on validation of the application to be resilient against a list of security vulnerabilities prevalent, weighted based on impact of the security vulnerabilities on organization and the probability of occurrence of the security vulnerabilities. The S-rating is obtained using the Gaussian standard normal distribution by mapping a cumulative security risk score of the application against an S-truth table comprising a historical cumulative weighted security risk scores of the plurality of applications analyzed prior to the application.

**Computation steps of each of the C-rating, the U-rating, the S-rating, the A-rating and the P-rating are described below in conjunction with FIGs. 3 to 7 with examples.**

The FIG. 3 depicts steps performed by the compatibility module 112, implemented by the processor 104, for computing the **C-rating.** The market share listener, at step 302, listens continuously to web traffic analytics tools to identify the plurality of browsers having highest market share. Simultaneously, the application crawler, at step 304, performs automated navigation through a given application (application of interest being analyzed) and the plurality of pages of the application, accommodating necessary data requirements critical to parse through the application, such as login credentials, input field values, cookie acceptance, drop-down list selections and the like. Once the navigation process is completed, a compatibility assessor, at step 306, computes real-time compatibility quality rating **(C-rating)** with right contextual knowledge by considering not only the dynamic inputs but also inputs based the compatibility quality of other industry applications. The sub steps of the step 308 are described below.

A first sub step of the step 308 comprises, comparing the plurality of pages of the application across the plurality of browsers. A second sub step of the step 308 comprises, identifying anomalies of screen elements of the plurality of pages based on at least one of size and location. A third sub step of the step 308 comprises, calculating a contextual compatibility coverage for each browser among the plurality of browsers based on market share, number of pages validated and the anomalies. A fourth sub step of the step 308 comprises, aggregating and computing a cumulative compatibility coverage percentage of the application from the contextual compatibility coverage on each browser. A fifth sub step of the step 308 comprises, computing the C-rating based on the Gaussian standard normal by mapping the compatibility coverage of the application against the C-truth table comprising the historical cumulative compatibility coverage percentages of the plurality of applications. A sixth sub step of the step 308 comprises, updating the C-truth table by including the C-rating of the application.

The computation of the C-rating is explained below with help of an example. While the current industry methods focus solely on comparing the elements of web pages across various browsers, the method disclosed computes a **weighted browser coverage** not only based on number of pages that are completely compatible against various browsers, but also accommodating the "real-time" market share of those browsers (derived from market share listener) and compatibility coverage of other applications in the market to arrive at a contextual quality inference. These inferences across various browsers are culminated to arrive at the **C-rating.**

a. Initially, a browser specific, **contextual compatibility coverage** is calculated for each of the browsers (and its versions) considered. This is a product of total number of compatible pages and the real time market share of the browser, based on total number of pages validated.

b. These individual browser specific coverage are consumed to aggregate a **cumulative compatibility coverage** that can be transposed into a **compatibility coverage percentage**

c. Finally the **compatibility rating** is calculated leveraging the neo-normal CX distribution model leveraging the compatibility rating accumulated through various market samples collected by validation of multiple web-applications. Choice of the samples are derived through multi-faceted selection criteria comprising of dimensions such as - application user volume, organizational revenue etc. Below steps attempts to brief the rating steps:

i. Extract the list of compatibility coverage of various application samples that had been saved in the storage of the system as a baseline (larger the baseline repository better the accuracy of the results)

ii. Considering a Gaussian standard normal distribution, divide the space between standard deviations of -3.0 and +2.0 into 10 equidistant partitions (0.5 standard deviation). Based on the area covered by individual partitions, arrive at the lower and upper limit by superimposing the baseline value onto the partitions. This sis done based on the area covered by each partition and overall sample size extracted/available. Note that areas below -3.0 and beyond 2.0 are considered 'outliers' since their coverage is negligible (not more than 2.38%).

iii. Given the various ranges created, following is the truth table that is leveraged to fit and rate the percentage compatibility coverage of the application under test against the **compatibility rating:**

**TABLE 2 (C-truth table)**

| Range | Range Value | Rating |
|---|---|---|
| Range 1 | Lower Limit 1 to Upper Limit 1 | 5 |
| Range 2 | Lower Limit 2 to Upper Limit 2 | |
| Range 3 | Lower Limit 3 to Upper Limit 3 | |
| Range 4 | Lower Limit 4 to Upper Limit 4 | 4 |
| Range 5 | Lower Limit 5 to Upper Limit 5 | |
| Range 6 | Lower Limit 6 to Upper Limit 6 | 3 |
| Range 7 | Lower Limit 7 to Upper Limit 7 | |
| Range 8 | Lower Limit 8 to Upper Limit 8 | 2 |
| Range 9 | Lower Limit 9 to Upper Limit 9 | |
| Range 10 | Lower Limit 10 to Upper Limit 10 | 1 |

iv. Finally, include the compatibility coverage of the application under test into the baseline repository to continuously upkeep the same. This enables growing the baseline repository and hence make the assessment more contextual.

As an illustration, the coefficients and parameters have been substituted with sample real-life values and use cases in the section below. The individual ratings calculated as per the above methods are illustrated for ease of understanding.

Provided is an illustration of the method to arrive at a contextual compatibility rating considering the market dynamics and based on inputs gathered from multiple systems involving the Market Share Listener', the 'Application Crawler' and the 'Compatibility Assessor'. This can be useful to organizations in gauging the compatibility coverage of their applications in context to the current market and industry trends.

Assumed below are the figures against critical factors such as total number of pages validated, number of compatible pages, and market share of various browsers popular in the market, as tabulated in the table below. These parameters are major inputs in computation of **contextual compatibility coverage.** This value acts as a seminal entity in arriving at a **cumulative compatibility coverage,** which can be transposed into a **compatibility coverage percentage:**

**TABLE 3**

| Browser | No. of Pages Validated | No. of Compatible Pages | Market Share | Contextual Compatibility Coverage |
|---|---|---|---|---|
| Google Chrome | 500 | 500 | 55 | 55 |
| Firefox | 500 | 500 | 6 | 6 |
| Internet Explorer | 500 | 500 | 4 | 4 |
| Safari | 500 | 150 | 14 | 4.2 |
| **Cumulative Compatibility Coverage** | | | | **69.2** |

Considering the approach defined as part of the method, weighted and cumulative browser coverage computes to 69.2, which subsequently transposes into a compatibility coverage percentage of **87.59.**

**Compatibility Rating:** Before jumping into computation of compatibility rating, let us assume the baseline population to be of size 100 and follows a trend as tabulated below:

**TABLE 4**

| Sample No. | Percentile Compatibility Coverage |
|---|---|
| 1 | 100% |

(continued)

| Sample No. | Percentile Compatibility Coverage |
|---|---|
| 2 | 99% |
| 3 | 98% |
| 4 . | 97% |
| 5 | 96% |
| 6 | 95% |
| 7 | 94% |
| 8 | 93% |
| 9 | 92% |
| 10 | 91% |
| ... | ... |
| ... | ... |
| ... | ... |
| 97 | 4% |
| 98 | 3% |
| 99 | 2% |
| 100 | 1% |
| Given the above sample size and coverage values, the compatibility truth table happens to be as shown below: | |

**TABLE 5**

| Range | Range Value | Rating |
|---|---|---|
| Range 1 | 99.1 to 100% | 5 |
| Range 2 | 94.1% to 99% | |
| Range 3 | 85.1% to 94% | |
| Range 4 | 70.1% to 85% | 4 |
| Range 5 | 51.1% to 70% | |
| Range 6 | 32.1% to 51% | 3 |
| Range 7 | 17.1% to 32% | |
| Range 8 | 8.1% to 17% | 2 |
| Range 9 | 3.1% to 8% | |
| Range 10 | 0 to 3% | 1 |
| With the application under test at 87.59%, the application falls under Range 3 and hence will carry a Compatibility Rating of '5'. | | |

The above quantified compatibility rating derived through the above method provides an organizations with a view beyond just volume of discrepancies in the form of

1. Impact that the identified anomalies have on the end-customer by considering real-time listening of attributes such as market share

2. Potential choice of base browser to build applications since, higher the market share of the base-browser, greater the application coverage

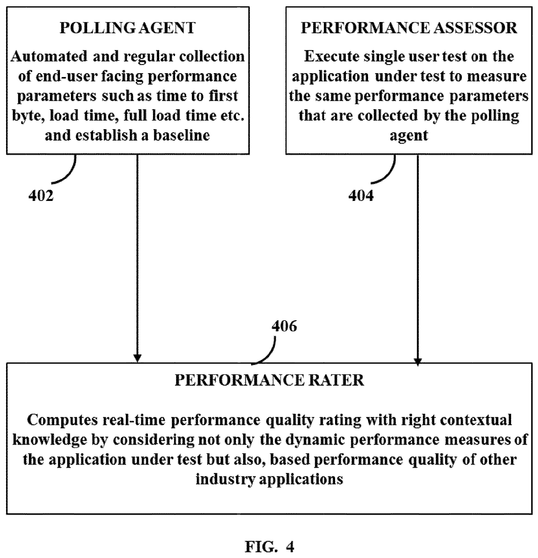

Now, referring to FIG. 4, the FIG. 4 depicts steps of computing the P-rating, as performed by the performance module 114, implemented by the processor 104. At step 402, the polling agent performs automated and regular collection of end-user facing performance parameters such as time to first byte, load time, full load time and the like and establishes a baseline. The test is for single users and data is updated real-time for consumption. For better results, it's recommended to have a minimum sample size (n) of 100.

At step 404, a performance assessor executes a single user test on the application under test to measure the same performance attributes, alternatively referred as performance parameters that are collected by the polling agent. At step 406, a performance rater computes real-time performance quality rating **(P-rating)** with right contextual knowledge by considering not only the dynamic performance measures of the application under test but also, based performance quality of other industry applications. The sub steps of the step 406 are described below.

A first sub step of the step 406 comprises measuring each performance attributes among the plurality of performance attributes of the application at the end user. A second sub step of the step 406 comprises, mapping each performance attribute of the application against the P-truth table leveraging Gaussian standard normal distribution, where the P-truth table comprises the range of historical values of each performance attribute collected by regular polling multiple applications. A third sub step of the step 406 comprises, fitting each performance attributes to a scoring scheme against a plurality of values of ranges in the P-truth table. A fourth sub step of the step 406 comprises, computing individual parameter score for each performance attribute based on an attribute value, a highest score in the range from the scoring scheme, and a highest attribute value of a normalized partition range. A fifth sub step of the step 406 comprises, computing the P-rating by performing a weighted average on the individual parameter scores by assigning the weightage coefficient to each performance attribute calibrated based on the plurality of requirements specific to the application. A sixth sub step of the step 406 comprises, updating the P-truth table with the individual performance attributes of the application.

With digital applications built on multi-tier architecture with varied technologies, end-user performance becomes a major contributor, influencing the quality of experience and plays a critical parameter in determining the cumulative CX Rating (CXR). While performance parameters are measured, they become the single point of convergence to evaluate responsiveness of user actions that is proliferated across the various layers in the architecture that are distinct based on technology, deployment model, and dependency on external entities impacting performance of application (e.g. network, geographical proximity). Dip in any of the performance attributes will have direct bearing on the basic usage of application by the end-users.

Unlike other CX dimensions such as accessibility or security that has benchmarked industry recognized standards or market studies, performance parameters will be mere numbers that can be ever optimized with increasing cost of infrastructure and engineering needs. Hence, it becomes critical for establishment of benchmarks in context with players in the similar domain or industry. There are multiple static and dynamic factors that needs to be taken into consideration while computing the performance rating of an application. Hence we have considered the following key components to be a part of the method that computes the performance rating of an application.

The polling performance parameters considered by the system 100 include Time to First Byte (TTFB), First Visual Change (FVC), Time to Interact (TTI), Load Time (LT), Full Load Time (FLT) and the like, which best represent performance of the application through the eyes of end users. While these parameters are representative sample, the system 100 is scalable to configure newer parameters and possess the ability to poll various industry applications to collect the samples at a configurable frequency (e.g. fortnightly, monthly). The applications can be chosen based on considerations such as overall revenue of the application/organization, user base (dynamic) etc., on an ongoing basis. Further, the evaluated performance parameters are used to contextualize it with the results polled from relevant industry players in the same domain.

Given the above background, the method involved in computation of the performance rating comprises of three critical components that have specific role to play - Polling Agent, Performance Assessor and Performance Rater:

a) **Polling Agent** - The agent will execute non-intrusive automated test against top websites classified by attributes such as revenue, user volume, industry sector etc. to collate end-user facing performance parameters (e.g. Time to First Byte, First Visual Change, Time to Interact, Load Time, Full Load Time) across various industries with pre-configured frequency (e.g. fortnightly, monthly). The test will be for single users and data is updated real-time for consumption. For better results, it's recommended to have a minimum sample size (n) of 100.

b) **Performance Assessor** - This component will execute single user test for performance on the same parameters used for polling against a webpage of the application under test.

c) **The performance rater-** Performs the complex task of computing the performance and translates to real-time rating that is on par with the most frequent polled values to bring in the right benchmarks in three key steps:

i. **Establishment of normalization for the polled results:** The polled results are distributed leveraging the Gaussian standard normal distribution. Divide the space between standard deviations of -3.0 and +2.0 into 10 equidistant partitions (0.5 standard deviation). Based on the area covered by individual partitions, arrive at the lower and upper limit by superimposing the baseline value onto the partitions. This should be done based on the area covered by each partition and overall sample size extracted dynamically. Note that areas below -3.0 and beyond 2.0 are considered 'outliers' since their coverage is negligible (not more than 2.38%).

ii. Given the various ranges created, following will be the truth table that will be leveraged to fit and rate the performance parameters of the application under test with the industry benchmark that is up-kept on a regular, on-going basis

**TABLE 6 (P-truth table)**

| Range | Range Values | Scoring Scheme | Final Performance Scores for Individual Parameter |
|---|---|---|---|
| Range 1 | Lower Limit 1 to Upper Limit 1 | 90-100 | Upper Limit of Scoring Scheme - [((Performance Parameter Value of Application under Assessment-Lower Limit)/(Upper Limit-Lower Limit))*10 |
| Range 2 | Lower Limit 2 to Upper Limit 2 | | |
| Range 3 | Lower Limit 3 to Upper Limit 3 | | |
| Range 4 | Lower Limit 4 to Upper Limit 4 | 80-90 | |
| Range 5 | Lower Limit 5 to Upper Limit 5 | | |
| Range 6 | Lower Limit 6 to Upper Limit 6 | 60-80 | |
| Range 7 | Lower Limit 7 to Upper Limit 7 | | |
| Range 8 | Lower Limit 8 to Upper Limit 8 | 40-60 | |
| Range 9 | Lower Limit 9 to Upper Limit 9 | | |
| Range 10 | Lower Limit 10 to Upper Limit 10 | 20-40 | |

iii. The Overall Performance Score is derived as a weighted average of the "Final Performance Scores for Individual Parameter" consuming the dynamic limits (explained in the table above) and converted on a scale of 1 -5.

As an illustration, the coefficients and parameters have been substituted with sample real-life values and use cases in the section below. The individual ratings calculated as per the above methods are illustrated for ease of understanding.

The below section provides an illustration of the method to arrive at a performance rating considering the industry benchmark up-kept dynamically through the polling carried out across top web applications across industries. This will be useful to organizations in gauging the end-user performance of their applications in context to the relevant industry, providing an 'Outside-In' view.

Consider a particular retail application, which is been monitored and has clocked the following numbers for end-user performance as a result of the assessment carried out.

**TABLE 7**

| Performance Parameters | Sample Output (in milliseconds) |
|---|---|
| Time to First Byte (TTFB) | 357 |
| First Visual Change (FVC) | 2059 |
| Load Time (LT) | 5806 |
| Full Load Time (FLT) | 6832 |

Benchmark Collection: The automated agents that poll for the data on an ongoing basis have the most recent collated the below for the top retail application (20 samples in this case has been taken for illustration purpose only) with the consideration for scale of revenue and user volume.

**TABLE 8**

| Sample Number | TTFB (milliseconds) | LT (milliseconds) | FVC (milliseconds) | FLT (milliseconds) |
|---|---|---|---|---|
| 1 | 74 | 1516 | 497 | 2708 |
| 2 | 129 | 2288 | 910 | 3391 |
| 3 | 143 | 2773 | 1300 | 4135 |
| 4 | 151 | 3078 | 1595 | 4746 |
| 5 | 178 | 3289 | 1801 | 5034 |

(continued)

| Sample Number | TTFB (milliseconds) | LT (milliseconds) | FVC (milliseconds) | FLT (milliseconds) |
|---|---|---|---|---|
| 6 | 194 | 3806 | 1984 | 6612 |
| 7 | 205 | 4132 | 2154 | 7299 |
| 8 | 222 | 4439 | 2376 | 7889 |
| 9 | 236 | 4882 | 2593 | 8684 |
| 10 | 253 | 5155 | 2749 | 9408 |
| 11 | 273 | 5618 | 2988 | 10211 |
| 12 | 285 | 6440 | 3288 | 11054 |
| 13 | 309 | 7122 | 3573 | 11879 |
| 14 | 331 | 7936 | 4062 | 12499 |
| 15 | 364 | 8629 | 4280 | 12957 |
| 16 | 395 | 9191 | 4599 | 13829 |
| 17 | 447 | 9858 | 5084 | 15195 |
| 18 | 528 | 10576 | 5482 | 16637 |
| 19 | 628 | 12224 | 6088 | 18079 |
| 20 | 719 | 14195 | 6900 | 19705 |

Normalization and Benchmark Distribution: The Performance Rater distributes the dynamic data polled for benchmark to variables on Gaussian Curve (normal distribution) and fits the performance parameters captured from the application under test to identified ranges, to create a contextualized score within the scoring scheme as explained in the table below.

**TABLE 9**

| Coefficients → | | | | | | | | |
|---|---|---|---|---|---|---|---|---|
| | a = 10 | | b = 10 | | c = 7 | | d = 5 | |
| **TTFB** | | **LT** | | **FVC** | | **FLT** | | **Scoring Scheme** |
| Range | App Valu e | Range | App Valu e | Range | App Valu e | Range | App Valu e | |
| 0 to 0 | | 0 to 0 | | 0 to 0 | | 0 to 0 | | 90-100 |
| 0 to 0 | | 0 to 0 | | 0 to 0 | | 0 to 0 | | 80-90 |
| 0 to 74 | | 0 to 1516 | | 0 to 497 | | 0 to 2708 | | |
| 75 to 143 | | 1517 to 2773 | | 498 to 1300 | | 2709 to 4135 | | |
| 144 to 194 | | 2774 to 3806 | | 1301to 1984 | | 4126 to 6612 | | |
| 195 to 253 | | 3807 to 5155 | | 1985 to 2749 | 2059 | 6613 to 9408 | 6832 | 60-80 |
| 254 to 331 | | 5156 to 7936 | 5806 | 2750 to 4062 | | 9409 to 12499 | | |
| 332 to 447 | 357 | 7937 to 9858 | | 4063 to 5084 | | 12500 to 15195 | | 40-60 |
| 448 to 628 | | 9859 to 12224 | | 5085 to 6088 | | 15196 to 18079 | | |

(continued)

| Coefficients → | | a | | b | | c | | d | | |
| --- | --- | --- | --- | --- | --- | --- | --- | --- | --- | --- |
| | | 10 | | 10 | | 7 | | 5 | | |
| TTFB | | LT | | | | FVC | | FLT | | Scoring Scheme |
| Range | App Valu e | Range | App Valu e | | | Range | App Valu e | Range | App Valu e | |
| 629 to 719 | | 12225 to 14195 | | 6089 to 6900 | | | | 18080 to 19705 | | 20-40 |

The scoring schemes are translated to specific Performance Individual Parameter Score(s):

Upper Limit of Scoring Scheme - [((Performance Parameter Value of Application under Assessment-Lower Limit)/ (Upper Limit-Lower Limit))*10]

TTFB:

$$60 - ((357-332)/(447-332))*10 = 57.83$$

LT:

$$80 - ((5806-5156)/(7936-5156))*10 = 77.66$$

FVC:

$$80 - ((2059-1985)/(2749-1985))*10 = 79.03$$

FLT:

$$80 - ((6832-6613)/(9408-6613))*10 = 79.22$$

The specific scores are averaged with configurable weightage (sample weightage provides for illustration; this can be customized on the specific business needs of the application or organization) and graded on a scale of 1-5.

P-Rating ( **alternatively referred as final P-rating or overall performance score::**

[(TTFB Performance Score*a) + (LT Performance Score*b) + (FVC Performance Score*c) + (FLT Performance Score*d)]*5/[(a+b+c+d)*100]

**P-rating** (implementing the formula explained above):

$$[(57.83*10)+(77.66*10)+(79.03*7)+(79.22*5)]*5/[(10+10+7+5)*100]= \textbf{3.6}$$

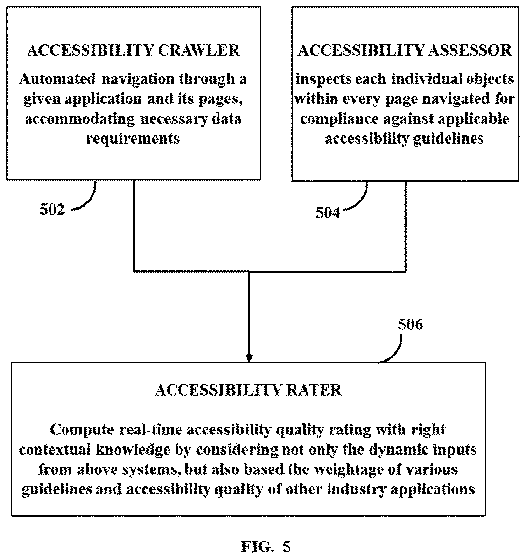

Now, referring to FIG. 5, the FIG. 5 depicts steps of computing the A-rating performed by the accessibility module 116, implemented by the processor 104. At step 502, the accessibility crawler performs automated navigation through a given application (application to be analyzed) and the plurality of pages of the application, accommodating necessary data requirements. Further, at step 504, an accessibility assessor inspects each individual objects within every page navigated for compliance against applicable accessibility guidelines. At step 506, an accessibility rater computes real-time accessibility quality rating **(A-rating)** with right contextual knowledge by considering not only the dynamic inputs from above systems, but also based the weightage of various guidelines and accessibility quality of other industry applications. The sub steps of the step 506 are described below.

A first sub step of the step 506 comprises, identifying the list of accessibility standards and guidelines to be complied by the application. A second sub step of the step 506 comprises, filtering guidelines applicable to the application. A third sub step of the step 506 comprises, arriving at a linear accessibility compliance by validating user-interface (UI) entities of the application for compliance against the filtered guidelines. A fourth sub step of the step 506 comprises, computing a weighted accessibility compliance by assigning weightage coefficients to the filtered guidelines based on the plurality of statutory needs, the complexity of implementation and the end-user impact. A fifth sub step of the step 506 comprises, computing the A-rating based on the Gaussian standard normal distribution of the A-truth table comprising the historical accessibility coverage of the plurality of applications providing weighted accessibility compliances of the plurality of applications. A sixth sub step of the step 506 comprises, updating the A-truth table with the computed A-rating providing weighted accessibility compliance of the application.

Akin to other quality dimensions, the quality of accessibility has its own purpose when it comes to its contribution towards computation of cumulative CX Rating (CXR). It plays a major role in enabling differently abled users to have equal access to the digital applications - web or mobile. Additionally, given the emphasis provided by various global statutory acts and standards such as Americans with Disabilities Act (ADA), European Accessibility Act, Rights of Persons with Disabilities (RPD) Act, International Organization for Standardization (ISO) and Web Content Accessibility Guidelines (WCAG) etc., it has become imperative to assure the quality of accessibility of an application to offer right 'Experience' to its end users. Anomalies in compliance to industry standards will not only lead to statutory sanctions but also, a downfall in the public image and user-agnostic experience which is expected out of the applications.

Given the adoption of agile development methodologies and need for rapid compliance to accessibility standards & guidelines, organizations are in dire need to enhance the quality of accessibility of their applications with three critical considerations - Evolving industry guidelines, Applicability of the guidelines in context to a particular application, How other applications/organizations fair in this space. Due to the dynamic nature involved in assuring compliance to accessibility requirements, following are the key parameters that are considered as part of this method that computes the accessibility rating of a digital application:

A. List of accessibility standards and guidelines (Evolving)

B. Applicability of a guideline to an application e.g. 'WCAG 2.1 1.2.8 Media Alternative' will be applicable only for applications with synchronized or video-only media

C. Weightage of individual guidelines based on considerations such as end-user impact, complexity of implementation as recommended by the regulator(s). For e.g. WCAG does not recommend that Level AAA conformance be required as a general policy for entire site because it is not possible to satisfy all Level AAA success criteria of some contents. Whereas, Level A is a minimum level of conformance that needs to be complied to. Hence it's prudent not to weigh both Level A and Level AAA at the same degree (Dynamic)

D. Accessibility compliance levels of various other applications in the industry (Dynamic)

Considering the above dimensions, the computation of accessibility rating of an application needs a 3-step approach:

A. Automated navigation through pages of an application based on its page hierarchy and specific data needs

B. Automated validation of various page objects for their compliance to weighted accessibility standards (e.g. WCAG 2.1 Level A, Level AA, Level AAA), based on their applicability to the application under test

C. Maintain and upkeep a repository of accessibility compliance levels of various applications to fit the maturity of the application under test, and arrive at a contextual rating in accordance to the industry trends

Given the above background, the method involved in computation of the accessibility rating comprises of two critical components that have specific role to play - Application Crawling and Accessibility Rating:

A. **Application Crawler:** The application crawler slinks through various pages of an application to enable evaluation of every individual element across various pages of the application. Beyond the typical page hierarchy of the application, it will accommodate any specific data requirements (e.g. authentication) that are necessary to sail through the application pages (leveraging various functional automation methods available in the market).

B. **Accessibility Assessor:** This component will inspect each individual elements within every page navigated by the application crawler. This will evaluate the elements for their compliance to various applicable accessibility guidelines prescribed by international consortiums such as W3C (WCAG) and statutory acts such as ADA, as applicable. This could include not-text contents, captions, audio controls, use of colors, images of texts, headings and labels etc.

C. **Accessibility Rater:** This entity is essentially the conglomeration of navigations and validations done thus far. Additionally, it incorporates the right contextual knowledge into the quality by amalgamating the dynamic attributes of accessibility guidelines (e.g. guideline's weightage, guideline's applicability) and contextual detail on accessibility quality coverage of other applications in the industry. This is in addition to conventional quality characteristics such as - number of pages parsed for validation, number of accessibility issues identified across various pages.

While the current industry methods focus solely on evaluating all the web page elements against the accessibility guidelines, this method computes a **weighted accessibility compliance** not only based on number of anomalies, but also based on the weightage of each of the guidelines, its applicability to an application across various accessibility compliance levels (e.g. WCAG Level A, Level AA) and its comparative standing against other applications in the market to arrive at a contextual quality inference. These inferences are culminated to arrive at a **cumulative accessibility rating.**

a. Initially, a **liner accessibility compliance** is computed for every guideline based on the pages/objects parsed, applicability of the guideline to the application (considering the type of objects present in the page) and issues identified during the validation.

b. Arrive at a **weighted accessibility compliance** by grouping the applicable guidelines into various weightage groups. The number of weightage groups can be decided based on the end-user impact, complexity of implementation as recommended by the regulator(s) (e.g. High, Medium, Low)

c. Finally the **accessibility rating** is calculated leveraging the neo-normal CX distribution model leveraging the accessibility rating accumulated from various market samples collected through validation of multiple digital applications. Choice of the samples are derived through multi-faceted selection criteria comprising of dimensions such as - application user volume, organizational revenue etc. Below steps attempts to brief the rating model:

i. Extract the list of accessibility coverage of various application samples that had been saved in the storage of the system as a baseline (larger the baseline repository better the accuracy of the results)

ii. Considering a Gaussian standard normal distribution, divide the space between standard deviations of -3.0 and +2.0 into 10 equidistant partitions (0.5 standard deviation). Based on the area covered by individual partitions, arrive at the lower and upper limit by superimposing the baseline value onto the partitions. This should be done based on the area covered by each partition and overall sample size extracted/available. Note that areas below -3.0 and beyond 2.0 are considered 'outliers' since their coverage is negligible (not more than 2.38%).

iii. Given the various ranges created, following is the truth table that will be leveraged to fit and rate the percentage accessibility coverage of the application under test against the **accessibility rating:** as in table below:

**TABLE 10 (A-truth table)**

| Range | Range Value | Rating |
|---|---|---|
| Range 1 | Lower Limit 1 to Upper Limit 1 | 5 |
| Range 2 | Lower Limit 2 to Upper Limit 2 | |
| Range 3 | Lower Limit 3 to Upper Limit 3 | |
| Range 4 | Lower Limit 4 to Upper Limit 4 | 4 |
| Range 5 | Lower Limit 5 to Upper Limit 5 | |
| Range 6 | Lower Limit 6 to Upper Limit 6 | 3 |
| Range 7 | Lower Limit 7 to Upper Limit 7 | |
| Range 8 | Lower Limit 8 to Upper Limit 8 | 2 |
| Range 9 | Lower Limit 9 to Upper Limit 9 | |
| Range 10 | Lower Limit 10 to Upper Limit 10 | 1 |

iv. Finally, include the accessibility coverage of the application under test into the baseline repository to continuously upkeep the same. This will enable grow the baseline repository and hence make the assessment more contextual.

As an illustration, the coefficients and parameters have been substituted with sample real-life values and use cases in the section below. The individual ratings calculated as per the above methods are provided for ease of understanding.

The below section provides an example to the method for arriving at a contextual accessibility rating considering the list of industry standards and guidelines based on inputs gathered from systems involving 'Application Crawler' and 'Accessibility Assessor'. This will useful to organizations in gauging the accessibility coverage of their applications in context to their implementation and industry trends.

Assume the following figures against critical factors such as total number of accessibility standards, applicability of guidelines for different applications, weightage of individual guidelines for different applications and accessibility ratings of application already assessed by this method, as tabulated below. These parameters are be major inputs in computation of **linear accessibility compliance.** This value acts as a seminal entity in arriving at a **weighted accessibility compliance,** which can be transposed into a **contextual accessibility rating:**

**TABLE 11**

| Application | Total No. of Accessibility Guidelines (e.g. WCAG 2.1) | No. of Applicable Guidelines for the Specific App. |
|---|---|---|
| App1 | 88 | 10 |
| App2 | 88 | 10 |

Given the above set-up, the applicability of individual guidelines and its weightage might vary between App1 and App2. Additionally, their compliance to each of these selected guidelines will be based on the application's build quality. The below table illustrates the case in point with three weightage groups - High, Medium and Low (this can be configured based on the specific regulatory recommendations). It should be noted that Guidelines 17-18 and Guidelines 19-20 are mutually exclusive between App1 and App2 as in table below:

**TABLE 12**

| App1 | | | App1 | | |
|---|---|---|---|---|---|
| Applicable Guidelines | Weightag e | Linear Complianc e | Applicable Guidelines | Weightag e | Linear Complianc e |
| Guideline 1 | High | Yes | Guideline 1 | High | Yes |
| Guideline 3 | High | Yes | Guideline 3 | High | Yes |
| Guideline 5 | High | No | Guideline 5 | High | Yes |
| Guideline 7 | High | No | Guideline 7 | High | Yes |
| Guideline 9 | Medium | Yes | Guideline 9 | Medium | Yes |
| Guideline 11 | Medium | Yes | Guideline 11 | Medium | Yes |
| Guideline 13 | Medium | Yes | Guideline 13 | Medium | Yes |
| Guideline 15 | Medium | Yes | Guideline 15 | Medium | Yes |
| Guideline 17 | Low | Yes | Guideline 19 | Low | No |
| Guideline 18 | Low | Yes | Guideline 20 | Low | No |

With this above assumptions the weighted accessibility coverage of **App1 is 70** and **App2 is 90,** considering the configurable coefficients for the weightage groups - High, Medium and Low to be 60, 30 and 10 respectively. As mentioned earlier, these coefficients can be modified based on the number of weightage groups and the recommendations from the regulator(s), if any.

**Accessibility Rating:** Before jumping into computation of accessibility rating, let's assume the baseline population to be of size 100 and follows a trend as tabulated in table below:

**TABLE 13**

| Sample No. | Accessibility Coverage |
|---|---|
| 1 | 100% |
| 2 | 99% |
| 3 | 98% |

(continued)

| Sample No. | Accessibility Coverage |
|---|---|
| 4 | 97% |
| 5 | 96% |
| 6 | 95% |
| 7 | 94% |
| 8 | 93% |
| 9 | 92% |
| 10 | 91% |
| ... | ... |
| ... | ... |
| ... | ... |
| 97 | 4% |
| 98 | 3% |
| 99 | 2% |
| 100 | 1% |

Given the above sample size and coverage values, the accessibility truth table happens to be as shown below table:

**TABLE 14**

| Range | Range Value | Rating |
|---|---|---|
| Range 1 | 99.1 to 100% | 5 |
| Range 2 | 94.1% to 99% | |
| Range 3 | 85.1% to 94% | |
| Range 4 | 70.1% to 85% | 4 |
| Range 5 | 51.1% to 70% | |
| Range 6 | 32.1% to 51% | 3 |
| Range 7 | 17.1% to 32% | |
| Range 8 | 8.1% to 17% | 2 |
| Range 9 | 3.1% to 8% | |
| Range 10 | 0 to 3% | 1 |

Application **App1** with a weighted accessibility coverage of 70% will fall into the **Range 5 and hence will acquire an Accessibility Rating of '4'.** Whereas, application **App2** with a weighted accessibility coverage of 90% will fall into the Range **3 and hence will acquire an Accessibility Rating of '5'.**

To summarize, the **above** quantified accessibility rating (A-rating) derived through the disclosed method provides organizations with a view beyond just volume of discrepancies in the form of:

1. Impact that the identified anomalies has in context to the specific application by considering the purpose of the application and kinds of elements used in the application (e.g. audio, video, synchronized media)

2. View of how other players in the market fair in the quality of accessibility of their applications, thereby providing an outside-in view to calibrate an application accordingly.

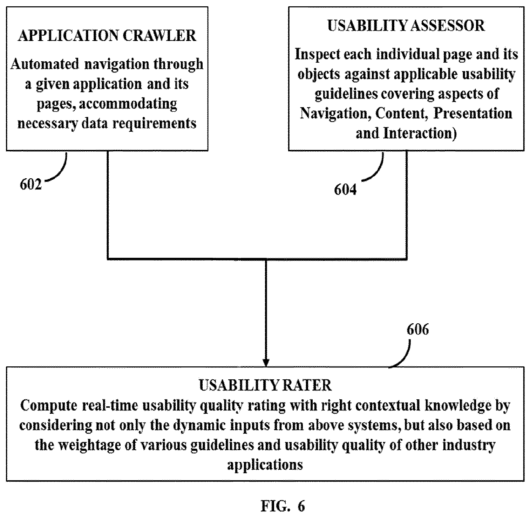

Now, referring to FIG. 6, the FIG. 6 depicts steps of computing the **U-rating** performed by the usability module 118, implemented by the processor 104. At step 602, the application crawler performs automated navigation through the given application and the plurality of pages of the application, accommodating necessary data requirements. At step 604, a usability assessor inspects each individual page and its objects against applicable usability guidelines covering aspects of navigation, content, presentation and interaction. At step 606, a usability rater computes real-time usability quality rating **(U-rating)** with right contextual knowledge by considering not only the dynamic inputs from above systems, but also based on the weightage of various guidelines and usability quality of other industry applications. The sub steps of the step 606 are described below.

A first sub step of the step 606 comprises, identifying the list of usability guidelines to be complied by the application. A second sub step of the step 606 comprises, filtering guidelines applicable to the application. A third sub step of the step 606 comprises, arriving at a linear usability compliance by validating the application for compliance against the filtered usability guidelines. A fourth sub step of the step 606 comprises, computing a weighted usability coverage by assigning weightage coefficients to the filtered guidelines based on impact of the filtered guidelines on the organization and the end-user in accomplishing a set of tasks with optimal level of effectiveness, efficiency and satisfaction. A fifth sub step of the step 606 comprises, computing the U-rating based on the Gaussian standard normal distribution of the U-truth table comprising weighted usability coverage of the plurality of applications. A sixth sub step of the step 606 comprises, updating the U-truth table with the weighted usability coverage of the tested application.

Usability validation is a critical entity of quality dimensions that has contribution towards computation of the cumulative CX Rating (CXR). While there are no industry wide standards or guidelines specific to IT applications, there are standards from ISO (ISO 9241-11) covering ergonomics of human-computer interaction and Human Machine Interface (HMI) standard that provides guiding principles to enable users in accomplishing specific goals through a machine interface with effectiveness, efficiency and satisfaction. They are consumed to formulate critical usability dimension of Navigation, Content, Presentation and Interaction which act to be the critical factors to evaluate usability experience of the actual end-user, when interacting with any software application to offer right 'Experience' to its end-users.

Usability being one of the most powerful dimension that has the ability to engage with users and transform prospects to customers, its quality needs to be carefully engineered through the eyes of the end-user early in the agile development cycle. Usability validations are performed on two modes namely - Summative and Formative where the former measures task specific parameters (Effectiveness, Efficiency and Satisfaction) which happens after the application design/development is reasonably complete, while the latter is about heuristic evaluation applied early during the wireframe design/prototypes etc. The usability validation taken to consideration for the computation of CX Rating below are mostly summative in nature and with due consideration of applicability of these guidelines for a particular application. Following are the critical considerations - Evolving industry guidelines, applicability of the guidelines in context to a particular application, how other applications/organizations fair in this space. Following are the key parameters that are considered as part of this method that computes the usability rating of a digital application:

A. List of usability guidelines (Evolving)

B. Applicability of a guideline to an application e.g. For an application targeted only for sharing information such as news websites, magazines, journals etc.; no need for user inputs, there need not be validations of the form controls to focus on input fields (Dynamic)

C. Weightage of individual guidelines are provided based on consideration of impact it has on the end-user in accomplishing a specific task with right level of effectiveness, efficiency and satisfaction. e.g. For a mobile website, validation of the responsiveness (ensuring that an application renders appropriately across various screen sizes and resolutions) will have a higher weightage due to the potential for loss of information to the end-user, than validating if pages uses the defined, hierarchical header tag (which is primed on enhanced readability).

D. Usability quality levels of various other applications in the industry (Dynamic)

Considering the above dimensions, the computation of usability rating of an application needs a 3-step approach:

A. Automated navigation through pages of an application based on its page hierarchy and specific data needs

B. Automated validation of usability guidelines against the crawled pages based on their applicability to the application under test

C. Maintain and upkeep a repository reflecting on the quality level specific to usability various applications across the key parameters including (but not limited to) Navigation, Content, Presentation and Interaction to fit the maturity of the application under test; arrive at a contextual rating in accordance to the industry trends

Given the above background, the method involved in computation of the usability rating comprises of three critical components that have specific role to play - Application Crawling, Usability Assessor and Usability Rating:

A. **Application Crawler:** The application crawler slinks through various pages of an application to enable evaluation of every individual element across various pages of the application. Beyond the typical page hierarchy of the application, it will accommodate any specific data requirements (e.g. authentication, cookie acceptance) that are necessary to sail through the application pages (leveraging various functional automation methods available in the market).

B. **Usability Assessor:** This component will first do a dynamic check of the applicable guidelines on the identified pages and will execute test to validate each of them across the identified set of pages. For e.g. some of the sample guideline include aspects of Navigation (access to homepage, sitemap), Content (defined heading, icons with labels), Presentation (color contrast ratio, title on all screens) Interaction (cursor position) etc. These validations can also be accomplished leveraging multiple proprietary tools available in the market e.g. Morae™, Crazy Egg™, Chalkmark™.

C. **Usability Rater:** This entity is essentially the conglomeration of navigations and validations done thus far. Additionally, it incorporates the right contextual knowledge into the quality by amalgamating the dynamic attributes of usability guidelines (e.g. guideline's weightage, guideline's applicability) and contextual detail on usability quality coverage of other applications in the industry. This is in addition to conventional quality characteristics such as - number of pages parsed for validation, number of usability issues identified across various pages.

While the some of the existing industry methods focus solely on evaluating all the web page elements against the some of these usability guidelines, this method computes a **usability score (U-rating)** not only based on number of anomalies, but also based on the weightage of each of the applicable guidelines and its comparative standing against other applications in the market to arrive at a contextual quality inference. These inferences are culminated to arrive at a **cumulative usability index.**

a. Initially, a **liner usability score** is computed based on the outcomes from the validations performed on the applicable guidelines across the number of webpages classified under the dimensions including (but not limited to) Navigation, Content, Presentation, Interaction. This classifications gets instrumental to compare with some of the industry players on their maturity levels for usability.

b. Arrive at a consolidated **usability score** with weightage defined on individual guidelines (applicable) based on impact it has on the user in accomplishing a specific task with right level of effectiveness, efficiency and satisfaction (e.g. High, Medium, Low)

c. Finally the **usability rating** is calculated leveraging the neo-normal CX distribution model leveraging the usability rating accumulated from various market samples collected through validation of multiple digital applications. Choice of the samples are derived through multi-faceted selection criteria comprising of dimensions such as - application user volume, organizational revenue etc. Below steps attempts to brief the rating model:

i. Extract the list of usability coverage of various application samples that had been saved in the storage of the system as a baseline (larger the baseline repository better the accuracy of the results)

ii. Considering a Gaussian standard normal distribution, divide the space between standard deviations of -3.0 and +2.0 into 10 equidistant partitions (0.5 standard deviation). Based on the area covered by individual partitions, arrive at the lower and upper limit by superimposing the baseline value onto the partitions. This should be done based on the area covered by each partition and overall sample size extracted/available. Note that areas below -3.0 and beyond 2.0 are considered 'outliers' since their coverage is negligible (not more than 2.38%).

iii. Given the various ranges created, following will be the truth table that will be leveraged to fit and rate the percentage usability coverage of the application under test against the **usability rating:**

**TABLE 15 (U-truth table)**

| Range | Range Value | Rating |
|---|---|---|
| Range 1 | Lower Limit 1 to Upper Limit 1 | 5 |
| Range 2 | Lower Limit 2 to Upper Limit 2 | |
| Range 3 | Lower Limit 3 to Upper Limit 3 | |
| Range 4 | Lower Limit 4 to Upper Limit 4 | 4 |
| Range 5 | Lower Limit 5 to Upper Limit 5 | |

(continued)

| Range | Range Value | Rating |
|---|---|---|
| Range 6 | Lower Limit 6 to Upper Limit 6 | 3 |
| Range 7 | Lower Limit 7 to Upper Limit 7 | |
| Range 8 | Lower Limit 8 to Upper Limit 8 | 2 |
| Range 9 | Lower Limit 9 to Upper Limit 9 | |
| Range 10 | Lower Limit 10 to Upper Limit 10 | 1 |

iv. Finally, include the usability coverage of the application under test into the baseline repository to continuously upkeep the same. This will enable grow the baseline repository and hence make the assessment more contextual.

As an illustration, the coefficients and parameters have been substituted with sample real-life values and use cases in the section below. The individual ratings calculated as per the above methods are provided for ease of understanding.

The below section provides an example to the method for arriving at a contextual usability rating considering the list of industry standards and guidelines based on inputs gathered from systems involving 'Application Crawler' and 'Usability Assessor'. This is useful to organizations in gauging the usability dimensions of their applications in context to their implementation and industry trends. To start with, let us assume the following figures against critical factors such as total number of usability guidelines, applicability of guidelines for different applications, weightage of individual guidelines for different applications and usability ratings of application already assessed by this method, as tabulated below. These parameters will be major inputs in computation of **linear usability score.** This value acts as a seminal entity in arriving at a **weighted usability compliance,** which can be transposed into a **contextual usability rating:**

TABLE 16

| Application | Total No. of Usability Guidelines | No. of Applicable Guidelines for the Specific App. |
|---|---|---|
| App1 | 24 | 10 |
| App2 | 24 | 10 |

Given the above set-up, the applicability of individual guidelines and its weightage might vary between App1 and App2. Additionally, their compliance to each of these selected guidelines will be based on the application's build quality. The below table illustrates the case in point with three weightage groups - High, Medium and Low (this can be configured based on the specific regulatory recommendations). It should be noted that Guidelines 17-18 and Guidelines 19-20 are mutually exclusive between App1 and App2:

TABLE 17

| App1 | | | App2 | | |
|---|---|---|---|---|---|
| Applicable Guidelines | Weightag e | Linear Complianc e | Applicable Guidelines | Weightag e | Linear Complianc e |
| Guideline 1 | High | Yes | Guideline 1 | High | Yes |
| Guideline 3 | High | Yes | Guideline 3 | High | Yes |
| Guideline 5 | High | No | Guideline 5 | High | Yes |
| Guideline 7 | High | No | Guideline 7 | High | Yes |
| Guideline 9 | Medium | Yes | Guideline 9 | Medium | Yes |
| Guideline 11 | Medium | Yes | Guideline 11 | Medium | Yes |
| Guideline 13 | Medium | Yes | Guideline 13 | Medium | Yes |
| Guideline 15 | Medium | Yes | Guideline 15 | Medium | Yes |
| Guideline 17 | Low | Yes | Guideline 19 | Low | No |
| Guideline 18 | Low | Yes | Guideline 20 | Low | No |

With this above assumptions the weighted usability coverage of **App1 is 92** and **App2 is 27,** considering the configurable coefficients for the weightage groups - High, Medium and Low to be 60, 30 and 10 respectively. As mentioned earlier, these coefficients can be modified based on the number of weightage groups and the recommendations from the regulator(s), if any.

**Usability Rating (U-rating):** Before jumping into computation of Usability rating, let's assume the baseline population to be of size 100 and follows a trend as tabulated below:

**TABLE 18**

| Sample No. | Usability Coverage |
|------------|--------------------|
| 1 | 100% |
| 2 | 99% |
| 3 | 98% |
| 4 | 97% |
| 5 | 96% |
| 6 | 95% |
| 7 | 94% |
| 8 | 93% |
| 9 | 92% |
| 10 | 91% |
| ... | ... |
| ... | ... |
| ... | ... |
| 97 | 4% |
| 98 | 3% |
| 99 | 2% |
| 100 | 1% |

Given the above sample size and coverage values, the usability truth table happens to be as shown below:

**TABLE 19**

| Range | Range Value | Rating |
|-------|-------------|--------|
| Range 1 | 99.1 to 100% | |
| Range 2 | 94.1% to 99% | 5 |
| Range 3 | 85.1% to 94% | |
| Range 4 | 70.1% to 85% | |
| Range 5 | 51.1% to 70% | 4 |
| Range 6 | 32.1% to 51% | |
| Range 7 | 17.1% to 32% | 3 |
| Range 8 | 8.1% to 17% | |
| Range 9 | 3.1% to 8% | 2 |
| Range 10 | 0 to 3% | 1 |

Application **App1** with a weighted usability coverage of 70% will fall into the **Range 5 and hence will acquire Usability Rating of '5'.** Whereas, application **App2** with a weighted usability coverage of 27% will fall into the **Range 3 and hence will acquire usability rating of '3'.**

To summarize, the above quantified usability rating derived through the defined method provides organizations with a view beyond just volume of discrepancies in the form of:

1. Impact it creates on the user in accomplishing a specific task with right level of effectiveness, efficiency and satisfaction in context to the specific application. This done by evaluating guidelines pertinent to the key guiding parameters classified under the aspects including (but not limited to) Navigation, Content, Presentation and Interaction that becomes guiding factor for usability

2. View of how other players in the market fair in the quality of usability of their applications, thereby providing an outside-in view to calibrate an application accordingly

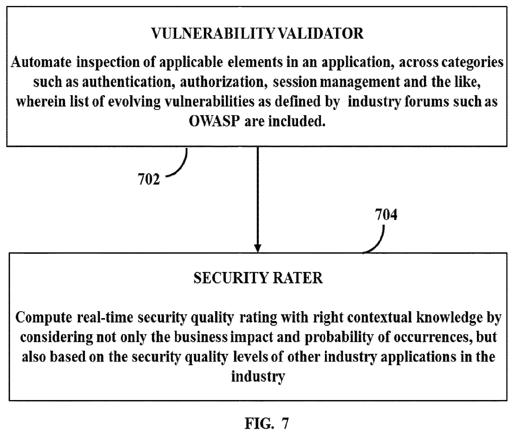

Now, referring to FIG. 7, the FIG. 7 depicts steps of computing the **S-rating** performed by the security module 120, implemented by the processor 104. at step 702, a vulnerability validator performs automate inspection of applicable elements in the application, across categories such as authentication, authorization, session management and the like, wherein list of evolving vulnerabilities as defined by industry forums such as OWASP are included. At step 704 a security rater computes real-time security quality rating **(S-rating)** with right contextual knowledge by considering not only the business impact and probability of occurrences, but also based on the security quality levels of other industry applications in the industry. The sub steps of the step 704 are described below.

A first sub step of the step 704 comprises, identifying a list of security vulnerabilities prevalent. A second sub step of the step 704 comprises, filtering the security vulnerabilities applicable to the application. A third sub step of the step 704 comprises, assigning weightage coefficients to the filtered security vulnerabilities primed on factors impacting the organization and factors impacting the probability of occurrence. A fourth sub step of the step 704 comprises, arriving at an individual security risk score and a cumulative weighted security risk score of the application based on the resilience of the application against each of the security vulnerabilities. A fifth sub step of the step 704 comprises, computing the S-rating based on the Gaussian standard normal distribution of the S-truth table comprising the historical cumulative weighted security risk scores of the plurality of applications. A sixth sub step of the step 704 comprises updating the S-truth table with the cumulative weighted security risk score of the application.

With the profound proliferation of digital applications and increased reliance of businesses on digital channels, security robustness of an application play a major role in instilling user-confidence on these business models that are embracing digital. Hence, security of an application - both mobile application and web application, has pivotal role in deciding on the experience of a customer, and hence the cumulative CX Rating (CXR). Additionally, given the enormity and menace created by recent attacks such as WannaCry™, Kovter™, Emotet™ and the like, it has become imperative to understand the potential vulnerabilities and brace the application for the same. Insights from communities such as the OWASP can be handy while identifying and prioritize these vulnerabilities.

Unfortified vulnerabilities might not only breach the application of its safety and reliability but also, can seriously rupture the public image, leading to the downfall of the application and thus the business itself.

Given the adoption of agile development methodologies and need for rapid assurance against security vulnerabilities, organizations are in dire need to preempt their applications from being vulnerable to various threats based on three critical considerations - Expanding security threats along with their business impact and probability of occurrence, Applicability of a vulnerability to an application, How other applications/organizations in the industry stand with respect to their security. Due to the dynamic nature involved in assuring security requirements, following are the key parameters that are considered as part of this method that computes the security rating of a digital application:

A. List of top security vulnerabilities prevalent in the industry e.g. OWASP Top 10 (Evolving)

B. Applicability of a guideline to an application e.g. an application with no login/user-account functions might not have to be much bothered about categories such as broken authentication and session management (Dynamic)

C. Severity of vulnerabilities based on considerations such as business impact and probability of occurrence (Evolving)

D. Security levels of various other applications in the industry (Dynamic)

Considering the above dimensions, the computation of security rating of an application needs a 2-step approach:

A. Automated validation of the application for the list of identified vulnerabilities inherited from communities such as OWASP, based on their applicability to the application under test

B. Maintain and upkeep a repository of security levels of various applications to fit the maturity of the application under test, and arrive at a contextual rating in accordance to the industry trends

Given the above background, the method involved in computation of the security rating comprises of two critical components that have specific role to play - Vulnerability Validation and Security Rating:

A. **Vulnerability Validator:** This component will inspect the relevant/applicable elements within the application to identify security vulnerabilities across multiple categories such as authentication, authorization, session management, client side attack, insecure transmission, injection etc. This will enable assessing the robustness of the application against the expanding & evolving list of top industry vulnerabilities such as OWASP Top 10.

B. **Security Rater:** This entity is essentially the conglomeration of security validations done above, incorporation of right application specificity by considering the potential business impact of the vulnerability (in the form of damage potential and affected users), probability of occurrence of the vulnerability (in the form of reproducibility, exploitability and discoverability), Applicability of the vulnerability to the application's functional and technical landscape and contextual knowledge through amalgamation of security quality levels of other applications in the industry. This is against the conventional and simple validation of security vulnerabilities through means of dynamics and static testing methods.

While the current industry methods focus solely on validating an application for various security vulnerabilities leveraging the static and dynamic security testing methods, this method computes a **weighted security risk score** not only based on number of potential threats, but also based on the weightage of each of the risks through consideration of their potential business impact and probability of occurrence and its comparative standing against other applications in the market to arrive at a contextual quality inference. These inferences are culminated to arrive at a **cumulative security rating.**

a. Initially, a **weighted security risk score** is computed by validating every potential and applicable vulnerability against the application. When failed by the vulnerability validator, the risk of each vulnerability is scored as a product of business impact and probability of occurrence. Business impact is a product of few other factors such as damage potential and affected users. Similarly, probability of occurrence is a product few other factors such as reproducibility, exploitability and discoverability. Each of these factors could be graded appropriately based on business impact, however below are few indicative guidance which can be leveraged for the grading. This particular step like the OWASP Risk Rating Methodology, can be customized based on specific business needs of an organization or application.

i. Damage potentials can be graded (e.g. critical, high, medium, and low) considering damages in the form of financial, reputation, non-compliance etc.

ii. Affected users can be graded (e.g. all, many, few, none) considering the volume in the form of developers, partners, authenticated users, anonymous Internet users etc.

iii. Reproducibility can be graded (e.g. easy, moderate, difficult) considering the ease of reproduce the test case that uncovered the vulnerability

iv. Exploitability can be graded (e.g. simple, moderate, impossible) considering the threat agent factors such as possible attackers (e.g. insider or anonymous outsider), skill level necessary, motivation factor (e.g. possible reward, high reward or no reward) etc.

v. Discoverability can be graded (e.g. high, medium, low) considering factors such as availability of automated tools to discover, easy, difficult or practically impossible

b. Summation of all the weighted security risk scores will help arrive at a **cumulative weighted security risk score.** This will be consumed for computing the final security rating of the application.

c. Finally the **security rating** is calculated leveraging the neo-normal CX distribution model leveraging the cumulative weighted security risk score accumulated from various market samples collected through validation of multiple digital applications. Choice of the samples are derived through multi-faceted selection criteria comprising of dimensions such as - application user volume, organizational revenue etc. Below steps attempts to brief the rating model:

i. Extract the list of weighted cumulative security risk score of various application samples that had been saved in the storage of the system as a baseline (larger the baseline repository better the accuracy of the results)

ii. Considering a Gaussian standard normal distribution, divide the space between standard deviations of -3.0 and +2.0 into 10 equidistant partitions (0.5 standard deviation). Based on the area covered by individual partitions, arrive at the lower and upper limit by superimposing the baseline value onto the partitions. This should be done based on the area covered by each partition and overall sample size extracted/available. Note that areas below -3.0 and beyond 2.0 are considered 'outliers' since their coverage is negligible (not more than 2.38%).

iii. Given the various ranges created, following will be the truth table that will be leveraged to fit and rate the cumulative weighted security risk score of an application under test, against the **cumulative weighted security risk score and security rating** of other applications in the industry. Higher the rating, lesser the security risk:

**TABLE 20 (S-truth table)**

| Range | Range Value | Rating |
|-------|-------------|--------|
| Range 1 | Lower Limit 1 to Upper Limit 1 | 5 |
| Range 2 | Lower Limit 2 to Upper Limit 2 | |
| Range 3 | Lower Limit 3 to Upper Limit 3 | |
| Range 4 | Lower Limit 4 to Upper Limit 4 | 4 |
| Range 5 | Lower Limit 5 to Upper Limit 5 | |
| Range 6 | Lower Limit 6 to Upper Limit 6 | 3 |
| Range 7 | Lower Limit 7 to Upper Limit 7 | |
| Range 8 | Lower Limit 8 to Upper Limit 8 | 2 |
| Range 9 | Lower Limit 9 to Upper Limit 9 | |
| Range 10 | Lower Limit 10 to Upper Limit 10 | 1 |

iv. Finally, include the cumulative weighted security risk score of the application under test into the baseline repository to continuously upkeep the same. This will enable grow the baseline repository and hence make the assessment more contextual.

As an illustration, the coefficients and parameters have been substituted with sample real-life values and use cases in the section below. The individual ratings calculated as per the above methods are provided for ease of understanding.

The below section provides an example to the method for arriving at a contextual security rating considering the ever evolving plethora of security risks and vulnerabilities, based on validation outputs gathered from 'Vulnerability Validator' system. This will useful for organizations in gauging the security risk of their applications in context to their implementation and industry trends.

Consider few of the sample security vulnerabilities listed from OWASP Top 10 for our illustration. Additionally, assumption is that the details of parameters pertaining to business impact and probability of occurrence as tabulated below:

**TABLE 21**

| OWASP Category | Test Case | Business Impact | | Probability of Occurrence | | |
|----------------|-----------|-----------------|---|--------------------------|---|---|
| | | Damage Potential | Affected Users | Reproducibility | Exploitability | Discoverability |
| A1-Injection | Vulnerability to SQL injection | Critical | All | Easy | Simple | High |
| A2 - Broken Authentication & Session Mgmt. | Test if password field has auto complete on | Medium | None | Easy | Simple | Low |
| | Test if application provide account lock out facility | Medium | None | Difficul t | Impossible | Low |
| | Validate if application accept URL with "../" string or wild card entry | Low | None | Difficul t | Impossible | Low |
| | Check if application deploy CAPTCHA type mechanism to differentiate automated action versus user actions | High | Many | Easy | Moderate | High |

(continued)

| OWASP Category | Test Case | Business Impact | | Probability of Occurrence | | |
|---|---|---|---|---|---|---|
| | | Damage Potential | Affected Users | Reproducibility | Exploitability | Discoverability |
| A3 - Sensitive Data Disclosur e | Test if user ID and password is transmitted in plain text | Low | None | Difficul t | Impossible | Low |

To arrive at a weighted security risk score for each of the vulnerabilities, let us quantify the parameters under business impact and probability of occurrence as follows. As mentioned in the approach, these values can be customized based on specific business needs of the organization and the application under test.

### TABLE 22

| Business Impact | | Probability of Occurrence | |
|---|---|---|---|
| Damage Potential | | Reproducibility | |
| Critical | 4 | Easy | 3 |
| High | 3 | Moderate | 2 |
| Medium | 2 | Difficult | 1 |
| Low | 1 | Exploitability | |
| Affected Users | | Simple | 3 |
| All | 4 | Moderate | 2 |
| Many | 3 | Impossible | 1 |
| Few | 2 | Discoverability | |
| None | 1 | High | 3 |
| | | Medium | 2 |
| | | Low | 1 |

Given the above set-up, let us assume the applicability and test results of two different applications - App1 and App2. Based on the results, the weighted security risk score has been computed as explained as part of the approach.

### TABLE 23

| | Test Case | App 1 | | | App 2 | | |
|---|---|---|---|---|---|---|---|
| | | Applicability | Test Result | Risk Score | Applicability | Test Result | Risk Score |
| A1- | Vulnerability | Yes | Pass | 0 | Yes | Fail | 72 |
| Injection | to SQL injection | | | | | | |
| A2 - Broken Authentication & Session Mgmt. | Test if password field has auto complete on | Yes | Pass | 0 | Yes | Pass | 0 |
| | Test if application provide account lock out facility | No | NA | 0 | Yes | Fail | 9 |
| | Validate if application accept URL with "../" string or wild card entry | Yes | Fail | 6 | No | NA | 0 |
| | Check if application deploy CAPTCHA type mechanism | Yes | Pass | 0 | Yes | Pass | 0 |

(continued)

|  | Test Case | App 1 | | | App 2 | | |
|---|---|---|---|---|---|---|---|
|  |  | Applic ability | Test Result | Risk Score | Applic ability | Test Result | Risk Score |
|  | to differentiate automated action versus user actions |  |  |  |  |  |  |
| A3 - Sensitive Data Disclosure | Test if user ID and password is transmitted in plain text | Yes | Pass | 0 | Yes | Fail | 6 |
| **Total Risk Score** | | **App1** | | **6** | **App 2** | | **87** |

So, it is seen that the cumulative security risk score of **App1 is 6** and **App2 is 87,** considering the configurable weighted coefficients assumed earlier.

**Security Rating:** Before jumping into computation of security rating, let's assume the baseline population to be of size 100 and follows a trend as tabulated below:

**TABLE 24**

| Sample No. | Cumulative Security Risk Score |
|---|---|
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 10 | 10 |
| ... | ... |
| ... | ... |
| ... | ... |
| 97 | 97 |
| 98 | 98 |
| 99 | 99 |
| 100 | 100 |

Given the above sample size and security risk scores, the security truth table happens to be as shown below:

**TABLE 25 (S- truth table)**

| Range | Range Value | Rating |
|---|---|---|
| Range 1 | 0 to 3 |  |
| Range 2 | 3.1 to 8 | 5 |
| Range 3 | 8.1 to 17 |  |

(continued)

| Range | Range Value | Rating |
|---|---|---|
| Range 4 | 17.1 to 32 | 4 |
| Range 5 | 32.1 to 51 | |
| Range 6 | 51.1 to 70 | 3 |
| Range 7 | 70.1 to 85 | |
| Range 8 | 85.1 to 94 | 2 |
| Range 9 | 94.1 to 99 | |
| Range 10 | 99.1 to 100 | 1 |

Application **App1** with a cumulative security risk score of 6 will fall into the **Range 2 and hence will acquire a Security Rating of '5'**. Whereas, application **App2** with a cumulative security risk score of 87 will fall into the **Range 8 and hence will acquire a Security Rating of '1'.**

To summarize, the above quantified security rating derived through the defined method provides organizations with a view beyond just volume of discrepancies in the form of:

1. Impact that the identified risks has in context to the specific application by considering their applicability to the application (based on its functions and technical nuances), impact on the business and probability of their occurrences

2. View of how other players in the market fair in the quality of security of their applications, thereby providing an outside-in view to calibrate an application accordingly

The cumulative CX, alternatively referred as CXR is calculated by the cumulative CX module 122, based on the following predefined function. This constitutes, the varied ratings which has been calculated in the aforementioned section to arrive at an weighted, holistic rating:

($\alpha$*Compatibility Rating) + ($\beta$*Usability Rating) + ($\gamma$*Accessibility Rating) + ($\delta$*Security Rating) + ($\theta$*Performance Rating)

Where, sum of $\alpha$, $\beta$, $\gamma$, $\delta$ and $\theta$ is equal to '1'. The values of the weightage coefficient can be arrived by considering the specific business needs of the application. For example, an intranet application built for users committed to a specific browser, can have the weightage coefficient of compatibility and security minimized with other areas taking over the center stage.

As an example, the coefficients and parameters have been substituted with real-life values in the tables below. The individual ratings calculated as per the above formulae are illustrated for ease of understanding below. Also, assume the individual ratings to be as mentioned tabulated in table below:

**TABLE X**

| Coefficients → | $\alpha$ | $\beta$ | $\gamma$ | $\delta$ | 0 |
|---|---|---|---|---|---|
| | 0.1 | 0.15 | 0.15 | 0.3 | 0.3 |
| **CX Dimension** | **Individual Indices** | | | | |
| Compatibility | 4.0 | | | | |
| Usability | 4.0 | | | | |
| Accessibility | 3.0 | | | | |
| Security | 3.0 | | | | |
| Performance | 3.0 | | | | |
| CX Rating | 3.25 | | | | |

Based on the above formula, the CX Rating of the application will be computed to **'3.25'.**

In summary, The dynamically calculated CX Rating (along with multiple auxiliary ratings) of an application, based on sampled pages validated across varied guidelines satisfies the following purposes:

1. Provide a quantified value for customer experience quality of a digital application, through an composite rating

2. Next level of insight on specific CX focus areas requiring immediate attention, through individual ratings across - Compatibility, Usability, Security, Accessibility and Usability

3. Baseline an application against industry standards, guidelines and market dynamics, thereby providing an outside-in view of its 'real-time' customer experience quality

The written description describes the subject matter herein to enable any person skilled in the art to make and use the embodiments.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

**Claims**

1. A processor implemented method for capturing a browser compatibility (C), usability (U), security (S), accessibility (A) and performance (P), dimensions of an application to quantify quality of Customer Experience (CX) for an application, the method comprising:

analyzing, by the processor, the application to compute a browser compatibility (C)-rating, a usability (U) rating, an application security (S)-rating, an accessibility (A)-rating and an application performance (P)-rating providing quantified CX associated with C, U , S, A and P dimensions of the application, wherein
the C-rating of the application is based on a comparison of a plurality of pages of the application across a plurality of browsers, selected based on market share of each of the plurality of browsers, to identify anomalies of elements of the plurality of pages based on at least one of size and location, wherein the C-rating is obtained using a Gaussian standard normal distribution by mapping a contextual compatibility coverage of the application against a C-truth table comprising of a historical cumulative compatibility coverage percentages of a plurality of applications analyzed prior to the application, wherein the contextual compatibility coverage is calculated for each browser among the plurality of browsers based on the market share, number of pages validated and the anomalies;

> wherein the plurality of browsers are identified based on the market share using web traffic analytics tools; and
> wherein the plurality of pages of the application are compared across the plurality of browsers by navigating the plurality of pages using an application crawler to accommodate data requirements to be parsed through the application for the comparison, wherein the data requirements include login credentials, input field values, cookie acceptance, drop-down list selections;

the P-rating of the application is based on measurement of a plurality of performance attributes of the application as perceived by an end-user, wherein a scoring scheme for each of the performance attributes among the plurality of performance attributes is obtained using a weightage coefficient of each performance attribute calibrated based on a plurality of requirements specific to the application and the Gaussian standard normal distribution by mapping each performance attribute against a P-truth table comprising a range of historical values of each performance attribute collected by regular polling multiple applications,

> wherein the plurality of performance attributes of the application comprise a time to first byte, a first visual change, a time to interact, a load time and a full load time of a webpage of the application;
> wherein each performance attribute among the plurality of performance attribute is measured by a performance assessor by executing a single user test on the application; and
> wherein a baseline for comparison of the plurality of performance attributes of the application is determined by a polling agent which collects performance attributes by regular polling of multiple applications associated with websites using non-intrusive automated test against the websites, wherein the performance attributes collected by the polling agent are similar to the plurality of performance attributes of the application;

the A-rating of the application is based on validation of a plurality of entities on the plurality of pages of the application to be complying with a list of accessibility standards and guidelines weighted based on a plurality of statutory needs, a complexity of implementation and an end user-impact, wherein the A-rating is obtained using the Gaussian standard normal distribution by mapping an accessibility coverage of the application against an A-truth table comprising a historical accessibility coverage of the plurality of applications analyzed prior to the application, wherein the plurality of pages of the application are navigated using an accessibility crawler for the plurality of entities, and wherein an accessibility assessor performs validation by inspecting each individual elements among the plurality of entities within every page navigated, for complying against the list of accessibility standards and guidelines;
the U-rating of the application is based on validation of the plurality of entities on the pages of the application to be complying with a list of usability guidelines weighted based on the end-user impact and applicability to implementation approach of the application, wherein the U-rating is obtained using the Gaussian standard normal distribution by mapping an usability coverage of the application against a U-truth table comprising a historical weighted usability coverage of the plurality of applications analyzed prior to the application,

> wherein the validation is performed by a usability assessor by inspecting each individual page and the elements of the page for complying against the list of usability guidelines covering aspects of navigation, content, presentation and interaction; and
> wherein the application crawler performs navigation through the application and the plurality of pages of the application for the data requirements required to parse through the plurality of pages; and

the S-rating of the application is based on identifying a list of security vulnerabilities in the application by validation of the application to be resilient against the list of security vulnerabilities prevalent, weighted based on impact of the security vulnerabilities on organization and the probability of occurrence of the security vulnerabilities, wherein the S-rating is obtained using the Gaussian standard normal distribution by mapping a cumulative security risk score of the application against an S-truth table comprising a historical cumulative weighted security risk scores of the plurality of applications analyzed prior to the application, wherein validation is performed by a vulnerability validator performing inspection of applicable elements in the application across categories comprising authentication, authorization, session management, client side attack, insecure transmission and injection against the list of security vulnerabilities prevalent in accordance to standards; and
computing, by the processor a cumulative CX-rating of the application by:

> allocating weightage coefficients to each of the C-rating, the U-rating, S-rating, the A-rating and the P-rating based on the plurality of requirements specific to the application; and
> aggregating the weighted C-rating, the weighted U-rating, the weighted S-rating, the weighted A-rating and the weighted P-rating based on a predefined function to compute the cumulative CX-rating.

2. The method of claim 1, wherein computing the C-rating comprises:

> aggregating and computing a cumulative compatibility coverage percentage of the application from the contextual compatibility coverage on each browser;
> computing the C-rating based on the Gaussian standard normal by mapping the compatibility coverage of the application against the C-truth table comprising the historical cumulative compatibility coverage percentages of the plurality of applications; and
> updating the C-truth table by including the C-rating of the application.

3. The method of claim 1, wherein computing the P-rating comprises:

> mapping each performance attribute of the application against the P-truth table leveraging Gaussian standard normal distribution, where the P-truth table comprises the range of historical values of each performance attribute collected by regular polling the multiple applications;
> fitting each performance attributes to the scoring scheme against a plurality of values of ranges in the P-truth table;
> computing individual parameter score for each performance attribute based on an attribute value, a highest score in the range from the scoring scheme, and a highest attribute value of a normalized partition range;
> computing the P-rating by performing a weighted average on the individual parameter scores by assigning the weightage coefficient to each performance attribute calibrated based on the plurality of requirements specific to the application; and
> updating the P-truth table with the individual performance attributes of the application.

4. The method of claim 1, wherein computing the A-rating comprises:

> identifying the list of accessibility standards and guidelines to be complied by the application;
> filtering guidelines applicable to the application from the list of accessibility standards and guidelines;
> arriving at a linear accessibility compliance by validating user-interface (UI) entities of the application for compliance against the filtered guidelines;
> computing a weighted accessibility compliance by assigning weightage coefficients to the filtered guidelines based on the plurality of statutory needs, the complexity of implementation and the end-user impact;
> computing the A-rating based on the Gaussian standard normal distribution of the A-truth table comprising the historical accessibility coverage of the plurality of applications providing weighted accessibility compliances of the plurality of applications; and
> updating the A-truth table with the computed A-rating providing weighted accessibility compliance of the application.

5. The method of claim 1, wherein computing the U-rating comprises:

> identifying the list of usability guidelines to be complied by the application;
> filtering guidelines applicable to the application from the list of usability guidelines;
> arriving at a linear usability compliance by validating the application for compliance against the filtered usability guidelines;
> computing a weighted usability coverage by assigning weightage coefficients to the filtered guidelines based on impact of the filtered guidelines on the organization and the end-user in accomplishing a set of tasks with optimal level of effectiveness, efficiency and satisfaction;

computing the U-rating based on the Gaussian standard normal distribution of the U-truth table comprising the historical weighted usability coverage of the plurality of applications; and

updating the U-truth table with the weighted usability coverage of the tested application.

6. The method of claim 1, wherein computing the S-rating comprises:

filtering the security vulnerabilities applicable to the application from the list of security vulnerabilities;

assigning weightage coefficients to the filtered security vulnerabilities primed on factors impacting the organization and factors impacting the probability of occurrence;

arriving at an individual security risk score and a cumulative weighted security risk score of the application based on the resilience of the application against each of the filtered security vulnerabilities;

computing the S-rating based on the Gaussian standard normal distribution of the S-truth table comprising the historical cumulative weighted security risk scores of the plurality of applications; and

updating the S-truth table with the cumulative weighted security risk score of the application.

7. A system (100) for capturing a browser compatibility (C), usability (U), security (S), accessibility (A) and performance (P) to quantify quality of Customer Experience (CX) for the application, the system (100) comprising:

a memory (102) storing instructions;

one or more Input/Output (I/O) interfaces (106);

and one or more processors (104) coupled to the memory (102) via the one or more I/O interfaces (106), wherein the processor (104) is configured by the instructions to:

analyze the application to compute a browser compatibility (C)-rating, a usability (U)-rating, an application security (S)-rating, an accessibility (A)-rating and an application performance (P)-rating providing quantified CX associated with C, U , S, A and P dimensions of the application, wherein

the C-rating of the application is based on comparison of a plurality of pages of the application across a plurality of browsers, selected based on market share of each of the plurality of browsers, to identify anomalies of elements of the plurality of pages based on at least one of size and location, wherein the C-rating is obtained using a Gaussian standard normal distribution by mapping a contextual compatibility coverage of the application against a C-truth table comprising of a historical cumulative compatibility coverage percentages of a plurality of applications analyzed prior to the application, wherein the contextual compatibility coverage is calculated for each browser among the plurality of browsers based on the market share, number of pages validated and the anomalies,

wherein the plurality of browsers are identified based on the market share using web traffic analytics tools; and

wherein the plurality of pages of the application are compared across the plurality of browsers by navigating the plurality of pages using an application crawler to accommodate data requirements to be parsed through the application for the comparison, wherein the data requirements include login credentials, input field values, cookie acceptance, drop-down list selections;

the P-rating of the application is based on measurement of a plurality of performance attributes of the application as perceived by an end-user, wherein a scoring scheme for each of the performance attributes among the plurality of performance attributes is obtained using a weightage coefficient of each performance attribute calibrated based on a plurality of requirements specific to the application and the Gaussian standard normal distribution by mapping each performance attribute against a P-truth table comprising a range of historical values of each performance attribute collected by regular polling multiple applications,

wherein the plurality of performance attributes of the application comprise a time to first byte, a first visual change, a time to interact, a load time and a full load time of a webpage of the application;

wherein each performance attribute among the plurality of performance attribute is measured by a performance assessor by executing a single user test on the application; and

wherein a baseline for comparison of the plurality of performance attributes of the application is determined by a polling agent which collects performance attributes by regular polling of multiple applications associated with websites using non-intrusive automated test against the websites, wherein the performance attributes collected by the polling agent are similar to the plurality of performance attributes of the application;

the A-rating of the application is based on validation of a plurality of entities on the plurality of pages of the application to be complying with a list of accessibility standards and guidelines weighted based on a plurality of statutory needs, a complexity of implementation and an end user-impact, wherein the A-rating is obtained using the Gaussian standard normal distribution by mapping an accessibility coverage of the application against an A-truth table comprising a historical accessibility coverage of the plurality of applications analyzed prior to the application, wherein the plurality of pages of the application are navigated using an accessibility crawler for the plurality of entities, and wherein an accessibility assessor performs validation by inspecting each individual elements among the plurality of entities within every page navigated, for complying against the list of accessibility standards and guidelines;

the U-rating of the application is based on validation of the plurality of entities on the pages of the application to be complying with a list of usability guidelines weighted based on the end-user impact and applicability to implementation approach of the application, wherein the U-rating is obtained using the Gaussian standard normal distribution by mapping an usability coverage of the application against a U-truth table comprising a historical accessibility coverage of the plurality of applications analyzed prior to the application,

wherein the validation is performed by a usability assessor performs by inspecting each individual page and the elements of the page for complying against the list of usability guidelines covering aspects of navigation, content, presentation and interaction; and

wherein the application crawler performs navigation through the application and the plurality of pages of the application for the data requirements necessary to parse through the plurality of pages; and

the S-rating of the application is based on identifying a list of security vulnerabilities in the application by validation of the application to be resilient against the list of security vulnerabilities prevalent, weighted based on impact of the security vulnerabilities on organization and the probability of occurrence of the security vulnerabilities, wherein the S-rating is obtained using the Gaussian standard normal distribution by mapping a cumulative security risk score of the application against an S-truth table comprising a historical cumulative weighted security risk scores of the plurality of applications analyzed prior to the application, wherein validation is performed by a vulnerability validator performing inspection of applicable elements in the application across categories comprising authentication, authorization, session management, client side attack, insecure transmission and injection against the list of security vulnerabilities prevalent in accordance to standards; and compute a cumulative CX-rating of the application by:

> allocating weightage coefficients to each of the C-rating, the U-rating, S-rating, the A-rating and the P-rating based on the plurality of requirements specific to the application; and
> aggregating the weighted C-rating, the weighted U-rating, the weighted S-rating, the weighted A-rating and the weighted P-rating based on a predefined function to compute the cumulative CX-rating.

8. The system (100) of claim 7, wherein the processor (104) is configured to compute the C-rating by:

> aggregating and computing a cumulative compatibility coverage percentage of the application from the contextual compatibility coverage on each browser;
> computing the C-rating based on the Gaussian standard normal by mapping the compatibility coverage of the application against the C-truth table comprising of the historical cumulative compatibility coverage percentages of the plurality of applications; and
> updating the C-truth table by including the C-rating of the application.

9. The system (100) of claim 7, wherein the processor (104) is configured to compute the P-rating by:

> mapping each performance attribute of the application against the P-truth table leveraging Gaussian standard normal distribution, where the P-truth table comprises the range of historical values of each performance attribute collected by regular polling multiple applications;
> fitting each performance attributes to the scoring scheme against a plurality of values of ranges in the P-truth table;
> computing individual parameter score for each performance attribute based on an attribute value, a highest score in the range from the scoring scheme, and a highest attribute value of a normalized partition range;
> computing the P-rating by performing a weighted average on the individual parameter scores by assigning the weightage coefficient to each performance attribute calibrated based on the plurality of requirements specific to the application; and
> updating the P-truth table with the individual performance attributes of the application.

10. The system (100) of claim 7, wherein the processor (104) is configured to compute the A-rating by:

> identifying the list of accessibility standards and guidelines to be complied by the application;

filtering guidelines applicable to the application from the list of accessibility standards and guidelines;

arriving at a linear accessibility compliance by validating user-interface (UI) entities of the application for compliance against the filtered guidelines;

computing a weighted accessibility compliance by assigning weightage coefficients to the filtered guidelines based on the plurality of statutory needs, the complexity of implementation and the end-user impact;

computing the A-rating based on the Gaussian standard normal distribution of the A-truth table comprising the historical accessibility coverage of the plurality of applications providing weighted accessibility compliances of the plurality of applications; and

updating the A-truth table with the computed A-rating providing weighted accessibility compliance of the application.

11. The system (100) of claim 7, wherein the processor (104) is configured to compute the U-rating by:

identifying the list of usability guidelines to be complied by the application;

filtering guidelines applicable to the application from the list of usability guidelines;

arriving at a linear usability compliance by validating the application for compliance against the filtered usability guidelines;

computing a weighted usability coverage by assigning weightage coefficients to the filtered guidelines based on impact of the filtered guidelines on the organization and the end-user in accomplishing a set of tasks with optimal level of effectiveness, efficiency and satisfaction;

computing the U-rating based on the Gaussian standard normal distribution of the U-truth table comprising the historical weighted usability coverage of the plurality of applications; and

updating the U-truth table with the weighted usability coverage of the tested application.

12. The system (100) of claim 7, wherein the processor (104) is configured to compute the S-rating by:

filtering the security vulnerabilities applicable to the application from the list of security vulnerabilities;

assigning weightage coefficients to the filtered security vulnerabilities primed on factors impacting the organization and factors impacting the probability of occurrence;

arriving at an individual security risk score and a cumulative weighted security risk score of the application based on the resilience of the application against each of the filtered security vulnerabilities;

computing the S-rating based on the Gaussian standard normal distribution of the S-truth table comprising the historical cumulative weighted security risk scores of the plurality of applications; and updating the S-truth table with the cumulative weighted security risk score of the application.

13. One or more non-transitory machine readable information storage mediums comprising one or more instructions which when executed by one or more hardware processors cause:

analyzing an application to compute a browser compatibility (C)-rating, a usability (U)-rating, an application security (S)-rating, an accessibility (A)-rating and an application performance (P)-rating providing a quantified CX associated with C, U , S, A and P dimensions of the application, wherein

the C-rating of the application is based on comparison of a plurality of pages of the application across a plurality of browsers, selected based on market share of each of the plurality of browsers, to identify anomalies of elements of the plurality of pages based on at least one of size and location, wherein the C-rating is obtained using a Gaussian standard normal distribution by mapping a contextual compatibility coverage of the application against a C-truth table comprising of a historical cumulative compatibility coverage percentages of a plurality of applications analyzed prior to the application, wherein the contextual compatibility coverage is calculated for each browser among the plurality of browsers based on the market share, number of pages validated and the anomalies;

wherein the plurality of browsers are identified based on the market share using web traffic analytics tools; and

wherein the plurality of pages of the application are compared across the plurality of browsers by navigating the plurality of pages using an application crawler to accommodate data requirements to be parsed through the application for the comparison, wherein the data requirements include login credentials, input field values, cookie acceptance, drop-down list selections;

the P-rating of the application is based on measurement of a plurality of performance attributes of the application as perceived by an end-user, wherein a scoring scheme for each of the performance attributes among the plurality of performance attributes is obtained using a weightage coefficient of each performance attribute calibrated based on a plurality of requirements specific to the application and the Gaussian standard normal distribution by mapping each performance attribute against a P-truth table comprising a range of historical values of each performance attribute collected by regular polling multiple applications,

wherein the plurality of performance attributes of the application comprise a time to first byte, a first visual change, a time to interact, a load time and a full load time of a webpage of the application;

wherein each performance attribute among the plurality of performance attribute is measured by a performance assessor by executing a single user test on the application; and

wherein a baseline for comparison of the plurality of performance attributes of the application is determined by a polling agent which collects performance attributes by regular polling of multiple applications associated with websites using non-intrusive automated test against the websites, wherein the performance attributes collected by the polling agent are similar to the plurality of performance attributes of the application;

the A-rating of the application is based on validation of a plurality of entities on the plurality of pages of the application to be complying with a list of accessibility standards and guidelines weighted based on a plurality of statutory needs, a complexity of implementation and an end user-impact, wherein the A-rating is obtained using the Gaussian standard normal distribution by mapping an accessibility coverage of the application against an A-truth table comprising a historical accessibility coverage of the plurality of applications analyzed prior to the application, wherein the plurality of pages of the application are navigated using an accessibility crawler for the plurality of entities, and wherein an accessibility assessor performs validation by inspecting each individual elements among the plurality of entities within every page navigated, for complying against the list of accessibility standards and guidelines;

the U-rating of the application is based on validation of the plurality of entities on the pages of the application to be complying with a list of usability guidelines weighted based on the end-user impact and applicability to implementation approach of the application, wherein the U-rating is obtained using the Gaussian standard normal distribution by mapping an usability coverage of the application against a U-truth table comprising a historical weighted usability coverage of the plurality of applications analyzed prior to the application wherein the validation is performed by a usability assessor performs by inspecting each individual page and the elements of the page for complying against the list of usability guidelines covering aspects of navigation, content, presentation and interaction; and

wherein the application crawler performs navigation through the application and the plurality of pages of the application for the data requirements necessary to parse through the plurality of pages; and

the S-rating of the application is based on identifying a list of security vulnerabilities in the application by validation of the application to be resilient against the list of security vulnerabilities prevalent, weighted based on impact of the security vulnerabilities on organization and the probability of occurrence of the security vulnerabilities, wherein the S-rating is obtained using the Gaussian standard normal distribution by mapping a cumulative security risk score of the application against an S-truth table comprising a historical cumulative weighted security risk scores of the plurality of applications analyzed prior to the application, wherein validation is performed by a vulnerability validator performing inspection of applicable elements in the application across categories comprising authentication, authorization, session management, client side attack, insecure transmission and injection against the list of security vulnerabilities prevalent in accordance to standards; and

computing, by the processor a cumulative CX-rating of the application by:

allocating weightage coefficients to each of the C-rating, the U-rating, S-rating, the A-rating and the P-rating based on the plurality of requirements specific to the application; and

aggregating the weighted C-rating, the weighted U-rating, the weighted S-rating, the weighted A-rating and the weighted P-rating based on a predefined function to compute the cumulative CX-rating.

**Patentansprüche**

1. Prozessorimplementiertes Verfahren zum Erfassen einer Browserkompatibilität (Compatibility, C), einer Benutzbarkeit (Usability, U), einer Sicherheit (Security, S), einer Zugänglichkeit (Accessibility, A) und einer Leistung (Performance, P), von Dimensionen einer Anwendung, um eine Qualität einer Kundenerfahrung (Customer Experience, CX) für eine Anwendung zu quantifizieren, wobei das Verfahren umfasst:

Analysieren, durch den Prozessor, der Anwendung, um eine Browserkompatibilität (Compatibility, C)-Bewertung, eine Benutzbarkeit (Usability, U)-Bewertung, eine Anwendungssicherheit (Security, S)-Bewertung, eine Zugänglichkeit (Accessibility, A)-Bewertung und eine Anwendungsleistung (Performance, P)-Bewertung zu berechnen, die quantifizierte CX bereitstellen, die C-, U-, S-, A- und P-Dimensionen der Anwendung zugeordnet sind, wobei

die C-Bewertung der Anwendung auf einem Vergleich einer Mehrzahl von Seiten der Anwendung über eine Mehrzahl von Browsern basiert, die basierend auf einem Marktanteil jedes der Mehrzahl von Browsern ausgewählt werden, um Anomalien von Elementen der Mehrzahl von Seiten basierend auf mindestens einem von Größe und Ort zu identifizieren, wobei die C-Bewertung unter Verwendung einer Gaußschen Standardnormalverteilung durch Abbilden einer kontextuellen Kompatibilitätsabdeckung der Anwendung auf eine C-Wahrheitstabelle erhalten wird, die historische kumulative Kompatibilitätsabdeckungsprozentsätze einer Mehrzahl von Anwendungen umfasst, die vor der Anwendung analysiert wurden, wobei die kontextuelle Kompatibilitätsabdeckung für jeden Browser unter der Mehrzahl von Browsern basierend auf dem Marktanteil, der Anzahl von validierten Seiten und den Anomalien berechnet wird;

wobei die Mehrzahl von Browsern basierend auf dem Marktanteil unter Verwendung von Webverkehrsanalysewerkzeugen identifiziert wird; und
wobei die Mehrzahl von Seiten der Anwendung über die Mehrzahl von Browsern verglichen wird, indem die Mehrzahl von Seiten unter Verwendung eines Anwendungs-Crawlers navigiert wird, um Datenanforderungen zu berücksichtigen, die durch die Anwendung für den Vergleich geparst werden sollen, wobei die Datenanforderungen Anmeldeinformationen, Eingabefeldwerte, Cookie-Akzeptanz, Dropdown-Listenauswahlen beinhalten;

die P-Bewertung der Anwendung auf einer Messung einer Mehrzahl von Leistungsattributen der Anwendung, wie sie von einem Endbenutzer wahrgenommen wird, basiert, wobei ein Bewertungsschema für jedes der Leistungsattribute unter der Mehrzahl von Leistungsattributen unter Verwendung eines Gewichtungskoeffizienten Leistungsattributs erhalten wird, das basierend auf einer Mehrzahl von Anforderungen, die für die Anwendung spezifisch sind, und der Gaußschen Standardnormalverteilung durch Abbilden jedes Leistungsattributs auf eine P-Wahrheitstabelle kalibriert wird, die einen Bereich von historischen Werten jedes Leistungsattributs umfasst, die durch regelmäßiges Abfragen mehrerer Anwendungen gesammelt werden,

wobei die Mehrzahl von Leistungsattributen der Anwendung eine Zeit bis zum ersten Byte, eine erste visuelle Änderung, eine Zeit zum Interagieren, eine Ladezeit und eine volle Ladezeit einer Webseite der Anwendung umfasst;
wobei jedes Leistungsattribut unter der Mehrzahl von Leistungsattributen durch einen Leistungsbeurteiler durch Ausführen eines Einzelbenutzertests an der Anwendung gemessen wird; und
wobei eine Basislinie für einen Vergleich der Mehrzahl von Leistungsattributen der Anwendung durch einen Abfrageagenten bestimmt wird, der Leistungsattribute durch regelmäßiges Abfragen mehrerer Anwendungen, die mit Webseiten assoziiert sind, unter Verwendung eines nicht intrusiven automatisierten Tests auf die Webseiten sammelt, wobei die Leistungsattribute, die durch den Abfrageagenten gesammelt werden, der Mehrzahl von Leistungsattributen der Anwendung ähnlich sind;

die A-Bewertung der Anwendung auf einer Validierung einer Mehrzahl von Entitäten auf der Mehrzahl von Seiten der Anwendung basiert, um einer Liste von Zugänglichkeitsstandards und Richtlinien zu entsprechen, die basierend auf einer Mehrzahl von gesetzlichen Anforderungen, einer Komplexität der Implementierung und einer Endbenutzerauswirkung gewichtet werden, wobei die A-Bewertung unter Verwendung der Gaußschen Standardnormalverteilung durch Abbilden einer Zugänglichkeitsabdeckung der Anwendung auf eine A-Wahrheitstabelle erhalten wird, die eine historische Zugänglichkeitsabdeckung der Mehrzahl von Anwendungen umfasst, die vor der Anwendung analysiert wurden, wobei die Mehrzahl von Seiten der Anwendung unter Verwendung eines Zugänglichkeits-Crawlers für die Mehrzahl von Entitäten navigiert wird, und wobei ein Zugänglichkeitsbeurteiler eine Validierung durch Prüfen jedes einzelnen Elements unter der Mehrzahl von Entitäten innerhalb jeder navigierten Seite durchführt, um der Liste von Zugänglichkeitsstandards und Richtlinien zu entsprechen;

die U-Bewertung der Anwendung auf einer Validierung der Mehrzahl von Entitäten auf den Seiten der Anwendung basiert, um einer Liste von Nutzbarkeitsrichtlinien zu entsprechen, die basierend auf der Endbenutzerauswirkung und Anwendbarkeit auf Implementierungsansatz der Anwendung gewichtet werden, wobei die U-Bewertung unter Verwendung der Gaußschen Standardnormalverteilung durch Abbilden einer Nutzbarkeitsabdeckung der Anwendung auf eine U-Wahrheitstabelle erhalten wird, die eine historische gewichtete Nutzbarkeitsabdeckung der Mehrzahl von Anwendungen umfasst, die vor der Anwendung analysiert wurden,

wobei die Validierung durch einen Nutzbarkeitsbeurteiler durch Prüfen jeder einzelnen Seite und der Elemente der Seite durchgeführt wird, um der Liste von Nutzbarkeitsrichtlinien zu entsprechen, die Aspekte von Navigation, Inhalt, Darstellung und Interaktion abdecken; und

wobei der Anwendungs-Crawler eine Navigation durch die Anwendung und die Mehrzahl von Seiten der Anwendung für die Datenanforderungen durchführt, die erforderlich sind, um die Mehrzahl von Seiten zu parsen; und

die S-Bewertung der Anwendung auf einem Identifizieren einer Liste von Sicherheitsschwachstellen in der Anwendung durch Validierung der Anwendung basiert, um gegenüber der Liste von vorherrschenden Sicherheitsschwachstellen robust zu sein, gewichtet basierend auf einer Auswirkung der Sicherheitsschwachstellen auf die Organisation und der Wahrscheinlichkeit des Auftretens der Sicherheitsschwachstellen, wobei die S-Bewertung unter Verwendung der Gaußschen Standardnormalverteilung durch Abbilden einer kumulativen Sicherheitsrisikobewertung der Anwendung auf eine S-Wahrheitstabelle erhalten wird, die eine historische kumulative gewichtete Sicherheitsrisikobewertung der Mehrzahl von Anwendungen umfasst, die vor der Anwendung analysiert wurden, wobei die Validierung durch einen Schwachstellenprüfer durchgeführt wird, der eine Prüfung von anwendbaren Elementen in der Anwendung über Kategorien durchführt, die Authentifizierung, Autorisierung, Sitzungsverwaltung, Client-Seitenangriff, unsichere Übertragung und Injektion gegenüber der Liste von Sicherheitsschwachstellen umfassen, die gemäß Standards vorherrschen; und

Berechnen, durch den Prozessor, einer kumulativen CX-Bewertung der Anwendung durch:

Zuweisen von Gewichtungskoeffizienten zu jeder der C-Bewertung, der U-Bewertung, der S-Bewertung, der A-Bewertung und der P-Bewertung basierend auf der Mehrzahl von Anforderungen, die für die Anwendung spezifisch sind; und

Aggregieren der gewichteten C-Bewertung, der gewichteten U-Bewertung, der gewichteten S-Bewertung, der gewichteten A-Bewertung und der gewichteten P-Bewertung basierend auf einer vordefinierten Funktion, um die kumulative CX-Bewertung zu berechnen.

2.  Verfahren nach Anspruch 1, wobei das Berechnen der C-Bewertung umfasst:

Aggregieren und Berechnen eines kumulativen Kompatibilitätsabdeckungsprozentsatzes der Anwendung aus der kontextuellen Kompatibilitätsabdeckung auf jedem Browser;

Berechnen der C-Bewertung basierend auf dem Gaußschen Standardnormal durch Abbilden der Kompatibilitätsabdeckung der Anwendung auf die C-Wahrheitstabelle, die die historischen kumulativen Kompatibilitätsabdeckungsprozentsätze der Mehrzahl von Anwendungen umfasst; und

Aktualisieren der C-Wahrheitstabelle durch Einschließen der C-Bewertung der Anwendung.

3.  Verfahren nach Anspruch 1, wobei das Berechnen der P-Bewertung umfasst:

Abbilden jedes Leistungsattributs der Anwendung auf die P-Wahrheitstabelle unter Nutzung der Gaußschen Standardnormalverteilung, wobei die P-Wahrheitstabelle den Bereich von historischen Werten jedes Leistungsattributs umfasst, die durch regelmäßiges Abfragen der mehreren Anwendungen gesammelt werden;

Anpassen jedes Leistungsattributs an das Bewertungsschema anhand einer Mehrzahl von Werten von Bereichen in der P-Wahrheitstabelle;

Berechnen einer individuellen Parameterbewertung für jedes Leistungsattribut basierend auf einem Attributwert, einer höchsten Bewertung in dem Bereich von dem Bewertungsschema und einem höchsten Attributwert eines normalisierten Partitionsbereichs;

Berechnen der P-Bewertung durch Durchführen eines gewichteten Durchschnitts an den individuellen Parameterbewertungen durch Zuweisen des Gewichtungskoeffizienten zu jedem Leistungsattribut , das basierend auf der Mehrzahl von Anforderungen kalibriert ist, die für die Anwendung spezifisch sind; und

Aktualisieren der P-Wahrheitstabelle mit den individuellen Leistungsattributen der Anwendung.

4.  Verfahren nach Anspruch 1, wobei das Berechnen der A-Bewertung umfasst:

Identifizieren der Liste von Zugänglichkeitsstandards und Richtlinien, die von der Anwendung eingehalten werden;

Filtern von Richtlinien, die auf die Anwendung anwendbar sind, aus der Liste von Zugänglichkeitsstandards und Richtlinien;

Erreichen einer linearen Zugänglichkeitseinhaltung durch Validieren von Benutzerschnittstellen(UI, User Interface)-Entitäten der Anwendung für die Einhaltung der gefilterten Richtlinien;

Berechnen einer gewichteten Zugänglichkeitseinhaltung durch Zuweisen von Gewichtungskoeffizienten zu den gefilterten Richtlinien basierend auf der Mehrzahl von gesetzlichen Anforderungen, der Komplexität der Implementierung und der Endbenutzerauswirkung;

Berechnen der A-Bewertung basierend auf der Gaußschen Standardnormalverteilung der A-Wahrheitstabelle, die die historische Zugänglichkeitsabdeckung der Mehrzahl von Anwendungen umfasst, die gewichtete Zugänglichkeitseinhaltungen der Mehrzahl von Anwendungen bereitstellt; und

Aktualisieren der A-Wahrheitstabelle mit der berechneten A-Bewertung, die gewichtete Zugänglichkeitseinhaltung der Anwendung bereitstellt.

5. Verfahren nach Anspruch 1, wobei das Berechnen der U-Bewertung umfasst:

Identifizieren der Liste von Nutzbarkeitsrichtlinien, die von der Anwendung eingehalten werden;

Filtern von Richtlinien, die auf die Anwendung anwendbar sind, aus der Liste von Nutzbarkeitsrichtlinien;

Erreichen einer linearen Nutzbarkeitseinhaltung durch Validieren der Anwendung für die Einhaltung der gefilterten Nutzbarkeitsrichtlinien;

Berechnen einer gewichteten Nutzbarkeitsabdeckung durch Zuweisen von Gewichtungskoeffizienten zu den gefilterten Richtlinien basierend auf Auswirkungen der gefilterten Richtlinien auf die Organisation und den Endbenutzer beim Durchführen eines Satzes von Aufgaben mit optimalem Grad an Effektivität, Effizienz und Zufriedenheit;

Berechnen der U-Bewertung basierend auf der Gaußschen Standardnormalverteilung der U-Wahrheitstabelle, die die historische gewichtete Nutzbarkeitsabdeckung der Mehrzahl von Anwendungen umfasst; und

Aktualisieren der U-Wahrheitstabelle mit der gewichteten Nutzbarkeitsabdeckung der getesteten Anwendung.

6. Verfahren nach Anspruch 1, wobei das Berechnen der S-Bewertung umfasst:

Filtern der Sicherheitsschwachstellen, die auf die Anwendung anwendbar sind, aus der Liste von Sicherheitsschwachstellen;

Zuweisen von Gewichtungskoeffizienten zu den gefilterten Sicherheitsschwachstellen basierend auf Faktoren, die die Organisation beeinflussen, und Faktoren, die die Wahrscheinlichkeit des Auftretens beeinflussen;

Erreichen einer individuellen Sicherheitsrisikobewertung und einer kumulativen gewichteten Sicherheitsrisikobewertung der Anwendung basierend auf der Widerstandsfähigkeit der Anwendung gegenüber jeder der gefilterten Sicherheitsschwachstellen;

Berechnen der S-Bewertung basierend auf der Gaußschen Standardnormalverteilung der S-Wahrheitstabelle, die die historischen kumulativen gewichteten Sicherheitsrisikobewertungen der Mehrzahl von Anwendungen umfasst; und

Aktualisieren der S-Wahrheitstabelle mit der kumulativen gewichteten Sicherheitsrisikobewertung der Anwendung.

7. System (100) zum Erfassen einer Browserkompatibilität (Compatibility, C), einer Benutzbarkeit (Usability, U), einer Sicherheit (S), einer Zugänglichkeit (Accessibility, A) und einer Leistung (Performance, P), um eine Qualität einer Kundenerfahrung (Customer Experiece, CX) für die Anwendung zu quantifizieren, wobei das System (100) umfasst:

einen Speicher (102), der Anweisungen speichert;

eine oder mehrere Eingabe/Ausgabe(E/A)-Schnittstellen (106);

und einen oder mehrere Prozessoren (104), die mit dem Speicher (102) über die eine oder die mehreren E/A-Schnittstellen (106) gekoppelt sind, wobei der Prozessor (104) durch die Anweisungen konfiguriert ist zum:

Analysieren der Anwendung, um eine Browserkompatibilität (Compatibility, C)-Bewertung, eine Benutzbarkeit (Usability, U)-Bewertung, eine Anwendungssicherheit (S)-Bewertung, eine Zugänglichkeit (Accessibility, A)-Bewertung und eine Anwendungsleistung (Performance, P)-Bewertung zu berechnen, die quantifizierte CX bereitstellen, die C-, U-, S-, A- und P-Dimensionen der Anwendung zugeordnet sind, wobei

die C-Bewertung der Anwendung auf einem Vergleich einer Mehrzahl von Seiten der Anwendung über eine Mehrzahl von Browsern basiert, die basierend auf einem Marktanteil jedes der Mehrzahl von Browsern ausgewählt werden, um Anomalien von Elementen der Mehrzahl von Seiten basierend auf mindestens einem von Größe und Ort zu identifizieren, wobei die C-Bewertung unter Verwendung einer Gaußschen Standardnormalverteilung durch Abbilden einer kontextuellen Kompatibilitätsabdeckung der Anwendung auf eine C-Wahrheitstabelle erhalten wird, die historische kumulative Kompatibilitätsabdeckungsprozentsätze einer Mehrzahl von Anwendungen umfasst, die vor der Anwendung analysiert wurden, wobei die kontextuelle Kompatibilitätsabdeckung für jeden Browser unter der Mehrzahl von Browsern basierend auf dem Marktanteil, der Anzahl von validierten Seiten und den Anomalien berechnet wird,

wobei die Mehrzahl von Browsern basierend auf dem Marktanteil unter Verwendung von Webverkehrsanalysewerkzeugen identifiziert wird; und

wobei die Mehrzahl von Seiten der Anwendung über die Mehrzahl von Browsern verglichen wird, indem die Mehrzahl von Seiten unter Verwendung eines Anwendungs-Crawlers navigiert wird, um Datenanforderungen zu berücksichtigen, die durch die Anwendung für den Vergleich geparst werden sollen, wobei die Datenanforderungen Anmeldeinformationen, Eingabefeldwerte, Cookie-Akzeptanz, Dropdown-Listenauswahlen beinhalten;

die P-Bewertung der Anwendung auf einer Messung einer Mehrzahl von Leistungsattributen der Anwendung, wie sie von einem Endbenutzer wahrgenommen wird, basiert, wobei ein Bewertungsschema für jedes der Leistungsattribute unter der Mehrzahl von Leistungsattributen unter Verwendung eines Gewichtungskoeffizienten eines jeden Leistungsattributs erhalten wird, das basierend auf einer Mehrzahl von Anforderungen, die für die Anwendung spezifisch sind, und der Gaußschen Standardnormalverteilung durch Abbilden jedes Leistungsattributs auf eine P-Wahrheitstabelle kalibriert wird, die einen Bereich von historischen Werten jedes Leistungsattributs umfasst, die durch regelmäßiges Abfragen mehrerer Anwendungen gesammelt werden,

wobei die Mehrzahl von Leistungsattributen der Anwendung eine Zeit bis zum ersten Byte, eine erste visuelle Änderung, eine Zeit zum Interagieren, eine Ladezeit und eine volle Ladezeit einer Webseite der Anwendung umfasst;

wobei jedes Leistungsattribut unter der Mehrzahl von Leistungsattributen durch einen Leistungsbeurteiler durch Ausführen eines Einzelbenutzertests an der Anwendung gemessen wird; und

wobei eine Basislinie für einen Vergleich der Mehrzahl von Leistungsattributen der Anwendung durch einen Abfrageagenten bestimmt wird, der Leistungsattribute durch regelmäßiges Abfragen mehrerer Anwendungen, die mit Webseiten assoziiert sind, unter Verwendung eines nicht intrusiven automatisierten Tests auf die Webseiten sammelt, wobei die Leistungsattribute, die durch den Abfrageagenten gesammelt werden, der Mehrzahl von Leistungsattributen der Anwendung ähnlich sind;

die A-Bewertung der Anwendung auf einer Validierung einer Mehrzahl von Entitäten auf der Mehrzahl von Seiten der Anwendung basiert, um einer Liste von Zugänglichkeitsstandards und Richtlinien zu entsprechen, die basierend auf einer Mehrzahl von gesetzlichen Anforderungen, einer Komplexität der Implementierung und einer Endbenutzerauswirkung gewichtet werden, wobei die A-Bewertung unter Verwendung der Gaußschen Standardnormalverteilung durch Abbilden einer Zugänglichkeitsabdeckung der Anwendung auf eine A-Wahrheitstabelle erhalten wird, die eine historische Zugänglichkeitsabdeckung der Mehrzahl von Anwendungen umfasst, die vor der Anwendung analysiert wurden, wobei die Mehrzahl von Seiten der Anwendung unter Verwendung eines Zugänglichkeits-Crawlers für die Mehrzahl von Entitäten navigiert wird, und wobei ein Zugänglichkeitsbeurteiler eine Validierung durch Prüfen jedes einzelnen Elements unter der Mehrzahl von Entitäten innerhalb jeder navigierten Seite durchführt, um der Liste von Zugänglichkeitsstandards und Richtlinien zu entsprechen;

die U-Bewertung der Anwendung auf einer Validierung der Mehrzahl von Entitäten auf den Seiten der Anwendung basiert, um einer Liste von Nutzbarkeitsrichtlinien zu entsprechen, die basierend auf der Endbenutzerauswirkung und Anwendbarkeit auf Implementierungsansatz der Anwendung gewichtet werden, wobei die U-Bewertung unter Verwendung der Gaußschen Standardnormalverteilung durch Abbilden einer Nutzbarkeitsabdeckung der Anwendung auf eine U-Wahrheitstabelle erhalten wird, die eine historische Zugänglichkeitsabdeckung der Mehrzahl von Anwendungen umfasst, die vor der Anwendung analysiert wurden,

wobei die Validierung durch einen Nutzbarkeitsbeurteiler durchgeführt wird, der durch Prüfen jeder einzelnen Seite und der Elemente der Seite durchgeführt wird, um der Liste von Nutzbarkeitsrichtlinien zu entsprechen, die Aspekte von Navigation, Inhalt, Darstellung und Interaktion abdecken; und

wobei der Anwendungs-Crawler eine Navigation durch die Anwendung und die Mehrzahl von Seiten der Anwendung für die Datenanforderungen durchführt, die erforderlich sind, um die Mehrzahl von Seiten zu parsen; und

die S-Bewertung der Anwendung auf einem Identifizieren einer Liste von Sicherheitsschwachstellen in der Anwendung durch Validierung der Anwendung basiert, um gegenüber der Liste von vorherrschenden Sicherheitsschwachstellen robust zu sein, gewichtet basierend auf einer Auswirkung der Sicherheitsschwachstellen auf die Organisation und der Wahrscheinlichkeit des Auftretens der Sicherheitsschwachstellen, wobei die S-Bewertung unter Verwendung der Gaußschen Standardnormalverteilung durch Abbilden einer kumulativen Sicherheitsrisikobewertung der Anwendung auf eine S-Wahrheitstabelle erhalten wird, die eine historische kumulative gewichtete Sicherheitsrisikobewertung der Mehrzahl von Anwendungen umfasst, die vor der Anwendung analysiert wurden, wobei die Validierung durch einen Schwachstellenprüfer durchgeführt wird, der eine Prüfung von anwendbaren Elementen in der Anwendung über Kategorien durchführt, die Authentifizierung, Autorisierung, Sitzungsverwaltung, Client-Seitenangriff, unsichere Übertragung und Injektion gegenüber der Liste von Sicherheitsschwachstellen umfassen, die gemäß Standards vorherrschen; und

Berechnen einer kumulativen CX-Bewertung der Anwendung durch:

Zuweisen von Gewichtungskoeffizienten zu jeder der C-Bewertung, der U-Bewertung, der S-Bewertung, der A-Bewertung und der P-Bewertung basierend auf der Mehrzahl von Anforderungen, die für die Anwendung spezifisch sind; und

Aggregieren der gewichteten C-Bewertung, der gewichteten U-Bewertung, der gewichteten S-Bewertung, der gewichteten A-Bewertung und der gewichteten P-Bewertung basierend auf einer vordefinierten Funktion, um die kumulative CX-Bewertung zu berechnen.

8. System (100) nach Anspruch 7, wobei der Prozessor (104) konfiguriert ist, um die C-Bewertung zu berechnen durch:

Aggregieren und Berechnen eines kumulativen Kompatibilitätsabdeckungsprozentsatzes der Anwendung aus der kontextuellen Kompatibilitätsabdeckung auf jedem Browser;

Berechnen der C-Bewertung basierend auf dem Gaußschen Standardnormal durch Abbilden der Kompatibilitätsabdeckung der Anwendung auf die C-Wahrheitstabelle, die die historischen kumulativen Kompatibilitätsabdeckungsprozentsätze der Mehrzahl von Anwendungen umfasst; und

Aktualisieren der C-Wahrheitstabelle durch Einschließen der C-Bewertung der Anwendung.

9. System (100) nach Anspruch 7, wobei der Prozessor (104) konfiguriert ist, um die P-Bewertung zu berechnen durch:

Abbilden jedes Leistungsattributs der Anwendung auf die P-Wahrheitstabelle unter Nutzung der Gaußschen Standardnormalverteilung, wobei die P-Wahrheitstabelle den Bereich von historischen Werten jedes Leistungsattributs umfasst, die durch regelmäßiges Abfragen mehrerer Anwendungen gesammelt werden;

Anpassen jedes Leistungsattributs an das Bewertungsschema anhand einer Mehrzahl von Werten von Bereichen in der P-Wahrheitstabelle;

Berechnen einer individuellen Parameterbewertung für jedes Leistungsattribut basierend auf einem Attributwert, einer höchsten Bewertung in dem Bereich von dem Bewertungsschema und einem höchsten Attributwert eines normalisierten Partitionsbereichs;

Berechnen der P-Bewertung durch Durchführen eines gewichteten Durchschnitts an den individuellen Parameterbewertungen durch Zuweisen des Gewichtungskoeffizienten zu jedem Leistungsattribut , das basierend auf der Mehrzahl von Anforderungen kalibriert ist, die für die Anwendung spezifisch sind; und

Aktualisieren der P-Wahrheitstabelle mit den individuellen Leistungsattributen der Anwendung.

10. System (100) nach Anspruch 7, wobei der Prozessor (104) konfiguriert ist, um die A-Bewertung zu berechnen durch:

Identifizieren der Liste von Zugänglichkeitsstandards und Richtlinien, die von der Anwendung eingehalten werden;

Filtern von Richtlinien, die auf die Anwendung anwendbar sind, aus der Liste von Zugänglichkeitsstandards und Richtlinien;

Erreichen einer linearen Zugänglichkeitseinhaltung durch Validieren von Benutzerschnittstellen(User Interface, UI)-Entitäten der Anwendung für die Einhaltung der gefilterten Richtlinien;

Berechnen einer gewichteten Zugänglichkeitseinhaltung durch Zuweisen von Gewichtungskoeffizienten zu den gefilterten Richtlinien basierend auf der Mehrzahl von gesetzlichen Anforderungen, der Komplexität der Implementierung und der Endbenutzerauswirkung;

Berechnen der A-Bewertung basierend auf der Gaußschen Standardnormalverteilung der A-Wahrheitstabelle, die die historische Zugänglichkeitsabdeckung der Mehrzahl von Anwendungen umfasst, die gewichtete Zugänglichkeitseinhaltungen der Mehrzahl von Anwendungen bereitstellt; und

Aktualisieren der A-Wahrheitstabelle mit der berechneten A-Bewertung, die gewichtete Zugänglichkeitseinhaltung der Anwendung bereitstellt.

**11.** System (100) nach Anspruch 7, wobei der Prozessor (104) konfiguriert ist, um die U-Bewertung zu berechnen durch:

Identifizieren der Liste von Nutzbarkeitsrichtlinien, die von der Anwendung eingehalten werden;

Filtern von Richtlinien, die auf die Anwendung anwendbar sind, aus der Liste von Nutzbarkeitsrichtlinien;

Erreichen einer linearen Nutzbarkeitseinhaltung durch Validieren der Anwendung für die Einhaltung der gefilterten Nutzbarkeitsrichtlinien;

Berechnen einer gewichteten Nutzbarkeitsabdeckung durch Zuweisen von Gewichtungskoeffizienten zu den gefilterten Richtlinien basierend auf Auswirkungen der gefilterten Richtlinien auf die Organisation und den Endbenutzer beim Durchführen eines Satzes von Aufgaben mit optimalem Grad an Effektivität, Effizienz und Zufriedenheit;

Berechnen der U-Bewertung basierend auf der Gaußschen Standardnormalverteilung der U-Wahrheitstabelle, die die historische gewichtete Nutzbarkeitsabdeckung der Mehrzahl von Anwendungen umfasst; und

Aktualisieren der U-Wahrheitstabelle mit der gewichteten Nutzbarkeitsabdeckung der getesteten Anwendung.

**12.** System (100) nach Anspruch 7, wobei der Prozessor (104) konfiguriert ist, um die S-Bewertung zu berechnen durch:

Filtern der Sicherheitsschwachstellen, die auf die Anwendung anwendbar sind, aus der Liste von Sicherheitsschwachstellen;

Zuweisen von Gewichtungskoeffizienten zu den gefilterten Sicherheitsschwachstellen basierend auf Faktoren, die die Organisation beeinflussen, und Faktoren, die die Wahrscheinlichkeit des Auftretens beeinflussen;

Erreichen einer individuellen Sicherheitsrisikobewertung und einer kumulativen gewichteten Sicherheitsrisikobewertung der Anwendung basierend auf der Widerstandsfähigkeit der Anwendung gegenüber jeder der gefilterten Sicherheitsschwachstellen;

Berechnen der S-Bewertung basierend auf der Gaußschen Standardnormalverteilung der S-Wahrheitstabelle, die die historischen kumulativen gewichteten Sicherheitsrisikobewertungen der Mehrzahl von Anwendungen umfasst; und

Aktualisieren der S-Wahrheitstabelle mit der kumulativen gewichteten Sicherheitsrisikobewertung der Anwendung.

**13.** Ein oder mehrere nichtflüchtige maschinenlesbare Informationsspeichermedien, die eine oder mehrere Anweisungen umfassen, die bei Ausführung durch einen oder mehrere Hardwareprozessoren bewirken, dass:

eine Anwendung analysiert wird, um eine Browserkompatibilität (Compatibility, C)-Bewertung, eine Benutzbarkeit (Usability, U)-Bewertung, eine Anwendungssicherheit (S)-Bewertung, eine Zugänglichkeit (Accessibility, A)-Bewertung und eine Anwendungsleistung (Performance, P)-Bewertung zu berechnen, die eine quantifizierte CX bereitstellen, die C-, U-, S-, A- und P-Dimensionen der Anwendung zugeordnet sind, wobei

die C-Bewertung der Anwendung auf einem Vergleich einer Mehrzahl von Seiten der Anwendung über eine Mehrzahl von Browsern basiert, die basierend auf einem Marktanteil jedes der Mehrzahl von Browsern ausgewählt werden, um Anomalien von Elementen der Mehrzahl von Seiten basierend auf mindestens einem von Größe und Ort zu identifizieren, wobei die C-Bewertung unter Verwendung einer Gaußschen Standardnormalverteilung durch Abbilden einer kontextuellen Kompatibilitätsabdeckung der Anwendung auf eine C-Wahrheitstabelle erhalten wird, die historische kumulative Kompatibilitätsabdeckungsprozentsätze einer Mehrzahl von Anwendungen umfasst, die vor der Anwendung analysiert wurden, wobei die kontextuelle Kompatibilitätsabdeckung für jeden Browser unter der Mehrzahl von Browsern basierend auf dem Marktanteil, der Anzahl von validierten Seiten und den Anomalien berechnet wird;

wobei die Mehrzahl von Browsern basierend auf dem Marktanteil unter Verwendung von Webverkehrsanalysewerkzeugen identifiziert wird; und

wobei die Mehrzahl von Seiten der Anwendung über die Mehrzahl von Browsern verglichen wird, indem die Mehrzahl von Seiten unter Verwendung eines Anwendungs-Crawlers navigiert wird, um Datenanforderungen zu berücksichtigen, die durch die Anwendung für den Vergleich geparst werden sollen, wobei die Datenanforderungen Anmeldeinformationen, Eingabefeldwerte, Cookie-Akzeptanz, Dropdown-Listenauswahlen beinhalten;

die P-Bewertung der Anwendung auf einer Messung einer Mehrzahl von Leistungsattributen der Anwendung, wie sie von einem Endbenutzer wahrgenommen wird, basiert, wobei ein Bewertungsschema für jedes der Leistungsattribute unter der Mehrzahl von Leistungsattributen unter Verwendung eines Gewichtungskoeffizienten eines jeden Leistungsattributs erhalten wird, das basierend auf einer Mehrzahl von Anforderungen, die für die Anwendung spezifisch sind, und der Gaußschen Standardnormalverteilung durch Abbilden jedes Leistungsattributs auf eine P-Wahrheitstabelle kalibriert wird, die einen Bereich von historischen Werten jedes Leistungsattributs umfasst, die durch regelmäßiges Abfragen mehrerer Anwendungen gesammelt werden,

wobei die Mehrzahl von Leistungsattributen der Anwendung eine Zeit bis zum ersten Byte, eine erste visuelle Änderung, eine Zeit zum Interagieren, eine Ladezeit und eine volle Ladezeit einer Webseite der Anwendung umfasst;

wobei jedes Leistungsattribut unter der Mehrzahl von Leistungsattributen durch einen Leistungsbeurteiler durch Ausführen eines Einzelbenutzertests an der Anwendung gemessen wird; und

wobei eine Basislinie für einen Vergleich der Mehrzahl von Leistungsattributen der Anwendung durch einen Abfrageagenten bestimmt wird, der Leistungsattribute durch regelmäßiges Abfragen mehrerer Anwendungen, die mit Webseiten assoziiert sind, unter Verwendung eines nicht intrusiven automatisierten Tests auf die Webseiten sammelt, wobei die Leistungsattribute, die durch den Abfrageagenten gesammelt werden, der Mehrzahl von Leistungsattributen der Anwendung ähnlich sind;

die A-Bewertung der Anwendung auf einer Validierung einer Mehrzahl von Entitäten auf der Mehrzahl von Seiten der Anwendung basiert, um einer Liste von Zugänglichkeitsstandards und Richtlinien zu entsprechen, die basierend auf einer Mehrzahl von gesetzlichen Anforderungen, einer Komplexität der Implementierung und einer Endbenutzerauswirkung gewichtet werden, wobei die A-Bewertung unter Verwendung der Gaußschen Standardnormalverteilung durch Abbilden einer Zugänglichkeitsabdeckung der Anwendung auf eine A-Wahrheitstabelle erhalten wird, die eine historische Zugänglichkeitsabdeckung der Mehrzahl von Anwendungen umfasst, die vor der Anwendung analysiert wurden, wobei die Mehrzahl von Seiten der Anwendung unter Verwendung eines Zugänglichkeits-Crawlers für die Mehrzahl von Entitäten navigiert wird, und wobei ein Zugänglichkeitsbeurteiler eine Validierung durch Prüfen jedes einzelnen Elements unter der Mehrzahl von Entitäten innerhalb jeder navigierten Seite durchführt, um der Liste von Zugänglichkeitsstandards und Richtlinien zu entsprechen;

die U-Bewertung der Anwendung auf einer Validierung der Mehrzahl von Entitäten auf den Seiten der Anwendung basiert, um einer Liste von Nutzbarkeitsrichtlinien zu entsprechen, die basierend auf der Endbenutzerauswirkung und Anwendbarkeit auf Implementierungsansatz der Anwendung gewichtet werden, wobei die U-Bewertung unter Verwendung der Gaußschen Standardnormalverteilung durch Abbilden einer Nutzbarkeitsabdeckung der Anwendung auf eine U-Wahrheitstabelle erhalten wird, die eine historische gewichtete Nutzbarkeitsabdeckung der Mehrzahl von Anwendungen umfasst, die vor der Anwendung analysiert wurden, wobei die Validierung durch einen Nutzbarkeitsbeurteiler durchgeführt wird, der durch Prüfen jeder einzelnen Seite und der Elemente der Seite durchgeführt wird, um der Liste von Nutzbarkeitsrichtlinien zu entsprechen, die Aspekte von Navigation, Inhalt, Darstellung und Interaktion abdecken; und

wobei der Anwendungs-Crawler eine Navigation durch die Anwendung und die Mehrzahl von Seiten der Anwendung für die Datenanforderungen durchführt, die erforderlich sind, um die Mehrzahl von Seiten zu parsen; und

die S-Bewertung der Anwendung auf einem Identifizieren einer Liste von Sicherheitsschwachstellen in der Anwendung durch Validierung der Anwendung basiert, um gegenüber der Liste von vorherrschenden Sicherheitsschwachstellen robust zu sein, gewichtet basierend auf einer Auswirkung der Sicherheitsschwachstellen auf die Organisation und der Wahrscheinlichkeit des Auftretens der Sicherheitsschwachstellen, wobei die S-Bewertung unter Verwendung der Gaußschen Standardnormalverteilung durch Abbilden einer kumulativen Sicherheitsrisikobewertung der Anwendung auf eine S-Wahrheitstabelle erhalten wird, die eine historische kumulative gewichtete Sicherheitsrisikobewertung der Mehrzahl von Anwendungen umfasst, die vor der Anwendung analysiert wurden, wobei die Validierung durch einen Schwachstellenprüfer durchgeführt wird, der eine Prüfung von anwendbaren Elementen in der Anwendung über Kategorien durchführt, die Authentifizierung, Autorisierung, Sitzungsverwaltung, Client-Seitenangriff, unsichere Übertragung und Injektion gegenüber der Liste von Sicherheitsschwachstellen umfassen, die gemäß Standards vorherrschen; und

Berechnen, durch den Prozessor, einer kumulativen CX-Bewertung der Anwendung durch:

Zuweisen von Gewichtungskoeffizienten zu jeder der C-Bewertung, der U-Bewertung, der S-Bewertung, der A-Bewertung und der P-Bewertung basierend auf der Mehrzahl von Anforderungen, die für die Anwendung spezifisch sind; und

Aggregieren der gewichteten C-Bewertung, der gewichteten U-Bewertung, der gewichteten S-Bewertung, der gewichteten A-Bewertung und der gewichteten P-Bewertung basierend auf einer vordefinierten Funktion, um die kumulative CX-Bewertung zu berechnen.

**Revendications**

1. Procédé mis en œuvre par processeur pour capturer une compatibilité de navigateur (C), une utilisabilité (U), une sécurité (S), une accessibilité (A) et des dimensions de performance (P) d'une application pour quantifier une qualité d'expérience client (CX) pour une application, le procédé comprenant :

l'analyse, par le processeur, de l'application pour calculer une évaluation de compatibilité de navigateur (C), une évaluation d'utilisabilité (U), une évaluation de sécurité d'application (S), une évaluation d'accessibilité (A) et une évaluation de performance d'application (P) fournissant une CX quantifiée associée à des dimensions C, U, S, A et P de l'application, dans lequel

l'évaluation C de l'application est basée sur une comparaison d'une pluralité de pages de l'application à travers une pluralité de navigateurs, sélectionnée sur la base d'une part de marché de chacun de la pluralité de navigateurs, pour identifier des anomalies d'éléments de la pluralité de pages sur la base d'au moins l'un d'une taille et d'un emplacement, dans lequel l'évaluation C est obtenue en utilisant une distribution normale standard gaussienne en mappant une couverture de compatibilité contextuelle de l'application par rapport à une table de vérité C comprenant des pourcentages de couverture de compatibilité cumulatifs historiques d'une pluralité d'applications analysées avant l'application, dans lequel la couverture de compatibilité contextuelle est calculée pour chaque navigateur parmi la pluralité de navigateurs sur la base de la part de marché, du nombre de pages validées et des anomalies ;

dans lequel la pluralité de navigateurs sont identifiés sur la base de la part de marché en utilisant des outils d'analyse de trafic Web ; et
dans lequel la pluralité de pages de l'application sont comparées à travers la pluralité de navigateurs en naviguant dans la pluralité de pages en utilisant un dispositif de suivi d'application pour s'adapter à des exigences de données à analyser à travers l'application pour la comparaison, dans lequel les exigences de données incluent des justificatifs d'identité de connexion, des valeurs de champ d'entrée, une acceptation de cookies, des sélections de liste déroulante ;

l'évaluation P de l'application est basée sur une mesure d'une pluralité d'attributs de performance de l'application tels que perçus par un utilisateur final, dans lequel un schéma de notation pour chacun des attributs de performance parmi la pluralité d'attributs de performance est obtenu en utilisant un coefficient de pondération de chaque attribut de performance calibré sur la base d'une pluralité d'exigences spécifiques à l'application et de la distribution normale standard gaussienne en mappant chaque attribut de performance par rapport à une table de vérité P comprenant une plage de valeurs historiques de chaque attribut de performance collectées par une interrogation régulière de multiples applications,

dans lequel la pluralité d'attributs de performance de l'application comprennent un temps jusqu'au premier octet, un premier changement visuel, un temps pour interagir, un temps de chargement et un temps de chargement complet d'une page Web de l'application ;
dans lequel chaque attribut de performance parmi la pluralité d'attributs de performance est mesuré par un évaluateur de performance en exécutant un test d'utilisateur unique sur l'application ; et
dans lequel une ligne de base pour une comparaison de la pluralité d'attributs de performance de l'application est déterminée par un agent d'interrogation qui collecte des attributs de performance par une interrogation régulière de multiples applications associées à des sites Web en utilisant un test automatisé non intrusif par rapport aux sites Web, dans lequel les attributs de performance collectés par l'agent d'interrogation sont similaires à la pluralité d'attributs de performance de l'application ;

l'évaluation A de l'application est basée sur une validation d'une pluralité d'entités sur la pluralité de pages de l'application pour se conformer à une liste de normes et de directives d'accessibilité pondérées sur la base d'une pluralité de besoins statutaires, d'une complexité de mise en œuvre et d'un impact d'utilisateur final, dans lequel l'évaluation A est obtenue en utilisant la distribution normale standard gaussienne en mappant une couverture d'accessibilité de l'application par rapport à une table de vérité A comprenant une couverture d'accessibilité historique de la pluralité d'applications analysées avant l'application, dans lequel la pluralité de pages de l'application sont naviguées en utilisant un dispositif de suivi d'accessibilité pour la pluralité d'entités, et dans lequel un évaluateur d'accessibilité effectue une validation en inspectant chaque élément individuel parmi la pluralité d'entités dans chaque page naviguée, pour se conformer à la liste de normes et de directives d'accessibilité ;
l'évaluation U de l'application est basée sur une validation de la pluralité d'entités sur les pages de l'application pour se conformer à une liste de directives d'utilisabilité pondérées sur la base de l'impact d'utilisateur final et de l'applicabilité à l'approche de mise en œuvre de l'application, dans lequel l'évaluation U est obtenue en utilisant la distribution normale standard gaussienne en mappant une couverture d'utilisabilité de l'application par rapport à une table de vérité U comprenant une couverture d'utilisabilité pondérée historique de la pluralité d'applications analysées avant l'application,

dans lequel la validation est effectuée par un évaluateur d'utilisabilité en inspectant chaque page individuelle et les éléments de la page pour se conformer à la liste de directives d'utilisabilité couvrant des aspects de navigation, de contenu, de présentation et d'interaction ; et

dans lequel le dispositif de suivi d'application effectue une navigation à travers l'application et la pluralité de pages de l'application pour les exigences de données requises pour analyser à travers la pluralité de pages ; et

l'évaluation S de l'application est basée sur une identification d'une liste de vulnérabilités de sécurité dans l'application par une validation de l'application pour être résiliente par rapport à la liste de vulnérabilités de sécurité prévalentes, pondérées sur la base d'un impact des vulnérabilités de sécurité sur une organisation et de la probabilité d'occurrence des vulnérabilités de sécurité, dans lequel l'évaluation S est obtenue en utilisant la distribution normale standard gaussienne en mappant un score de risque de sécurité cumulatif de l'application par rapport à une table de vérité S comprenant des scores de risque de sécurité pondérés cumulatifs historiques de la pluralité d'applications analysées avant l'application, dans lequel une validation est effectuée par un validateur de vulnérabilité effectuant une inspection d'éléments applicables dans l'application à travers des catégories comprenant une authentification, une autorisation, une gestion de session, une attaque côté client, une transmission et une injection non sécurisées par rapport à la liste de vulnérabilités de sécurité prévalentes conformément à des normes ; et

le calcul, par le processeur, d'une évaluation CX cumulative de l'application par :

l'attribution de coefficients de pondération à chacune de l'évaluation C, de l'évaluation U, de l'évaluation S, de l'évaluation A et de l'évaluation P sur la base de la pluralité d'exigences spécifiques à l'application ; et l'agrégation de l'évaluation C pondérée, de l'évaluation U pondérée, de l'évaluation S pondérée, de l'évaluation A pondérée et de l'évaluation P pondérée sur la base d'une fonction prédéfinie pour calculer l'évaluation CX cumulative.

2. Procédé selon la revendication 1, dans lequel le calcul de l'évaluation C comprend :

l'agrégation et le calcul d'un pourcentage de couverture de compatibilité cumulatif de l'application à partir de la couverture de compatibilité contextuelle sur chaque navigateur ;
le calcul de l'évaluation C sur la base de la normale standard gaussienne en mappant la couverture de compatibilité de l'application par rapport à la table de vérité C comprenant les pourcentages de couverture de compatibilité cumulatifs historiques de la pluralité d'applications ; et
la mise à jour de la table de vérité C en incluant l'évaluation C de l'application.

3. Procédé selon la revendication 1, dans lequel le calcul de l'évaluation P comprend :

le mappage de chaque attribut de performance de l'application par rapport à la table de vérité P en tirant parti d'une distribution normale standard gaussienne, où la table de vérité P comprend la plage de valeurs historiques de chaque attribut de performance collectées par une interrogation régulière des multiples applications ;
l'ajustement de chaque attribut de performance au schéma de notation par rapport à une pluralité de valeurs de plages dans la table de vérité P ;
le calcul d'un score de paramètre individuel pour chaque attribut de performance sur la base d'une valeur d'attribut, d'un score le plus élevé dans la plage à partir du schéma de notation, et d'une valeur d'attribut la plus élevée d'une plage de partition normalisée ;
le calcul de l'évaluation P en effectuant une moyenne pondérée sur les scores de paramètre individuels en attribuant le coefficient de pondération à chaque attribut de performance calibré sur la base de la pluralité d'exigences spécifiques à l'application ; et
la mise à jour de la table de vérité P avec les attributs de performance individuels de l'application.

4. Procédé selon la revendication 1, dans lequel le calcul de l'évaluation A comprend :

l'identification de la liste de normes d'accessibilité et de directives à respecter par l'application ;
le filtrage de directives applicables à l'application à partir de la liste de normes d'accessibilité et de directives ;
l'obtention d'une conformité d'accessibilité linéaire en validant des entités d'interface utilisateur (UI) de l'application pour une conformité par rapport aux directives filtrées ;
le calcul d'une conformité d'accessibilité pondérée en attribuant des coefficients de pondération aux directives filtrées sur la base de la pluralité de besoins statutaires, de la complexité de mise en œuvre et de l'impact d'utilisateur final ;
le calcul de l'évaluation A sur la base de la distribution normale standard gaussienne de la table de vérité A comprenant la couverture d'accessibilité historique de la pluralité d'applications fournissant des conformités d'accessibilité pondérées de la pluralité d'applications ; et
la mise à jour de la table de vérité A avec l'évaluation A calculée fournissant une conformité d'accessibilité pondérée de l'application.

5. Procédé selon la revendication 1, dans lequel le calcul de l'évaluation U comprend :

l'identification de la liste de directives d'utilisabilité à respecter par l'application ;
le filtrage de directives applicables à l'application à partir de la liste de directives d'utilisabilité ;
l'obtention d'une conformité d'utilisabilité linéaire en validant l'application pour une conformité par rapport aux directives d'utilisabilité filtrées ;
le calcul d'une couverture d'utilisabilité pondérée en attribuant des coefficients de pondération aux directives filtrées sur la base de l'impact des directives filtrées sur l'organisation et l'utilisateur final dans l'accomplissement d'un ensemble de tâches avec un niveau optimal d'efficacité, d'efficience et de satisfaction ;
le calcul de l'évaluation U sur la base de la distribution normale standard gaussienne de la table de vérité U comprenant la couverture d'utilisabilité pondérée historique de la pluralité d'applications ; et
la mise à jour de la table de vérité U avec la couverture d'utilisabilité pondérée de l'application testée.

6. Procédé selon la revendication 1, dans lequel le calcul de l'évaluation S comprend :

le filtrage des vulnérabilités de sécurité applicables à l'application à partir de la liste de vulnérabilités de sécurité ;
l'attribution de coefficients de pondération aux vulnérabilités de sécurité filtrées sur la base de facteurs impactant l'organisation et de facteurs impactant la probabilité d'occurrence ;
l'obtention d'un score de risque de sécurité individuel et d'un score de risque de sécurité pondéré cumulatif de l'application sur la base de la résilience de l'application par rapport à chacune des vulnérabilités de sécurité filtrées ;
le calcul de l'évaluation S sur la base de la distribution normale standard gaussienne de la table de vérité S comprenant les scores de risque de sécurité pondérés cumulatifs historiques de la pluralité d'applications ; et
la mise à jour de la table de vérité S avec le score de risque de sécurité pondéré cumulatif de l'application.

7. Système (100) pour capturer une compatibilité de navigateur (C), une utilisabilité (U), une sécurité (S), une accessibilité (A) et des performances (P) pour quantifier une qualité d'expérience client (CX) pour l'application, le système (100) comprenant :

une mémoire (102) stockant des instructions ;
une ou plusieurs interfaces d'entrée/sortie (E/S) (106) ;
et un ou plusieurs processeurs (104) couplés à la mémoire (102) via les une ou
plusieurs interfaces E/S (106), dans lequel le processeur (104) est configuré par les instructions pour :

analyser l'application pour calculer une évaluation de compatibilité de navigateur (C), une évaluation d'utilisabilité (U), une évaluation de sécurité d'application (S), une évaluation d'accessibilité (A) et une évaluation de performance d'application (P) fournissant une CX quantifiée associée à des dimensions C, U, S, A et P de l'application, dans lequel

l'évaluation C de l'application est basée sur une comparaison d'une pluralité de pages de l'application à travers une pluralité de navigateurs, sélectionnée sur la base d'une part de marché de chacun de la pluralité de navigateurs, pour identifier des anomalies d'éléments de la pluralité de pages sur la base d'au moins l'un d'une taille et d'un emplacement, dans lequel l'évaluation C est obtenue en utilisant une distribution normale standard gaussienne en mappant une couverture de compatibilité contextuelle de l'application par rapport à une table de vérité C comprenant des pourcentages de couverture de compatibilité cumulatifs historiques d'une pluralité d'applications analysées avant l'application, dans lequel la couverture de compatibilité contextuelle est calculée pour chaque navigateur parmi la pluralité de navigateurs sur la base de la part de marché, du nombre de pages validées et des anomalies, dans lequella pluralité de navigateurs sont identifiés sur la base de la part de marché en utilisant des outils d'analyse de trafic Web ; et

dans lequel la pluralité de pages de l'application sont comparées à travers la pluralité de navigateurs en naviguant dans la pluralité de pages en utilisant un dispositif de suivi d'application pour s'adapter à des exigences de données à analyser à travers l'application pour la comparaison, dans lequel les exigences de données incluent des justificatifs d'identité de connexion, des valeurs de champ d'entrée, une acceptation de cookies, des sélections de liste déroulante ;

l'évaluation P de l'application est basée sur une mesure d'une pluralité d'attributs de performance de l'application tels que perçus par un utilisateur final, dans lequel un schéma de notation pour chacun des attributs de performance parmi la pluralité d'attributs de performance est obtenu en utilisant un coefficient de pondération de chaque attribut de performance calibré sur la base d'une pluralité d'exigences spécifiques à l'application et de la distribution normale standard gaussienne en mappant chaque attribut de performance par rapport à une table de vérité P comprenant une plage de valeurs historiques de chaque attribut de performance collectées par une interrogation régulière de multiples applications,

dans lequel la pluralité d'attributs de performance de l'application comprennent un temps jusqu'au premier octet, un premier changement visuel, un temps pour interagir, un temps de chargement et un temps de chargement complet d'une page Web de l'application ;

dans lequel chaque attribut de performance parmi la pluralité d'attributs de performance est mesuré par un évaluateur de performance en exécutant un test d'utilisateur unique sur l'application ; et

dans lequel une ligne de base pour une comparaison de la pluralité d'attributs de performance de l'application est déterminée par un agent d'interrogation qui collecte des attributs de performance par une interrogation régulière de multiples applications associées à des sites Web en utilisant un test automatisé non intrusif par rapport aux sites Web, dans lequel les attributs de performance collectés par l'agent d'interrogation sont similaires à la pluralité d'attributs de performance de l'application ;

l'évaluation A de l'application est basée sur une validation d'une pluralité d'entités sur la pluralité de pages de l'application pour se conformer à une liste de normes et de directives d'accessibilité pondérées sur la base d'une pluralité de besoins statutaires, d'une complexité de mise en œuvre et d'un impact d'utilisateur final, dans lequel l'évaluation A est obtenue en utilisant la distribution normale standard gaussienne en mappant une couverture d'accessibilité de l'application par rapport à une table de vérité A comprenant une couverture d'accessibilité historique de la pluralité d'applications analysées avant l'application, dans lequel la pluralité de pages de l'application sont naviguées en utilisant un dispositif de suivi d'accessibilité pour la pluralité d'entités, et dans lequel un évaluateur d'accessibilité effectue une validation en inspectant chaque élément individuel parmi la pluralité d'entités dans chaque page naviguée, pour se conformer à la liste de normes et de directives d'accessibilité ;

l'évaluation U de l'application est basée sur une validation de la pluralité d'entités sur les pages de l'application pour se conformer à une liste de directives d'utilisabilité pondérées sur la base de l'impact d'utilisateur final et de l'applicabilité à l'approche de mise en œuvre de l'application, dans lequel l'évaluation U est obtenue en utilisant la distribution normale standard gaussienne en mappant une couverture d'utilisabilité de l'application par rapport à une table de vérité U comprenant une couverture d'accessibilité historique de la pluralité d'applications analysées avant l'application,

dans lequel la validation est effectuée par un évaluateur d'utilisabilité en inspectant chaque page individuelle et les éléments de la page pour se conformer à la liste de directives d'utilisabilité couvrant des aspects de navigation, de contenu, de présentation et d'interaction ; et

dans lequel le dispositif de suivi d'application effectue une navigation à travers l'application et la pluralité de pages de l'application pour les exigences de données nécessaires pour analyser à travers la pluralité de pages ; et

l'évaluation S de l'application est basée sur une identification d'une liste de vulnérabilités de sécurité dans l'application par une validation de l'application pour être résiliente par rapport à la liste de vulnérabilités de sécurité prévalentes, pondérées sur la base d'un impact des vulnérabilités de sécurité sur une organisation et de la probabilité d'occurrence des vulnérabilités de sécurité, dans lequel l'évaluation S est obtenue en utilisant la distribution normale standard gaussienne en mappant un score de risque de sécurité cumulatif de l'application par rapport à une table de vérité S comprenant des scores de risque de sécurité pondérés cumulatifs historiques de la pluralité d'applications analysées avant l'application, dans lequel une validation est effectuée par un validateur de vulnérabilité effectuant une inspection d'éléments applicables dans l'application à travers des catégories comprenant une authentification, une autorisation, une gestion de session, une attaque côté client, une transmission et une injection non sécurisées par rapport à la liste de vulnérabilités de sécurité prévalentes conformément à des normes ; et

le calcul d'une évaluation CX cumulative de l'application par :

l'attribution de coefficients de pondération à chacune de l'évaluation C, de l'évaluation U, de l'évaluation S, de l'évaluation A et de l'évaluation P sur la base de la pluralité d'exigences spécifiques à l'application ; et
l'agrégation de l'évaluation C pondérée, de l'évaluation U pondérée, de l'évaluation S pondérée, de l'évaluation A pondérée et de l'évaluation P pondérée sur la base d'une fonction prédéfinie pour calculer l'évaluation CX cumulative.

8. Système (100) selon la revendication 7, dans lequel le processeur (104) est configuré pour calculer l'évaluation C par :

l'agrégation et le calcul d'un pourcentage de couverture de compatibilité cumulatif de l'application à partir de la couverture de compatibilité contextuelle sur chaque navigateur ;
le calcul de l'évaluation C sur la base de la normale standard gaussienne en mappant la couverture de compatibilité de l'application par rapport à la table de vérité C comprenant les pourcentages de couverture de compatibilité cumulatifs historiques de la pluralité d'applications ; et
la mise à jour de la table de vérité C en incluant l'évaluation C de l'application.

9. Système (100) selon la revendication 7, dans lequel le processeur (104) est configuré pour calculer l'évaluation P par :

le mappage de chaque attribut de performance de l'application par rapport à la table de vérité P en tirant parti d'une distribution normale standard gaussienne, où la table de vérité P comprend la plage de valeurs historiques de chaque attribut de performance collectées par une interrogation régulière de multiples applications ;
l'ajustement de chaque attribut de performance au schéma de notation par rapport à une pluralité de valeurs de plages dans la table de vérité P ;
le calcul d'un score de paramètre individuel pour chaque attribut de performance sur la base d'une valeur d'attribut, d'un score le plus élevé dans la plage à partir du schéma de notation, et d'une valeur d'attribut la plus élevée d'une plage de partition normalisée ;
le calcul de l'évaluation P en effectuant une moyenne pondérée sur les scores de paramètre individuels en attribuant le coefficient de pondération à chaque attribut de performance calibré sur la base de la pluralité d'exigences spécifiques à l'application ; et
la mise à jour de la table de vérité P avec les attributs de performance individuels de l'application.

10. Système (100) selon la revendication 7, dans lequel le processeur (104) est configuré pour calculer l'évaluation A par :

l'identification de la liste de normes d'accessibilité et de directives à respecter par l'application ;
le filtrage de directives applicables à l'application à partir de la liste de normes d'accessibilité et de directives ;
l'obtention d'une conformité d'accessibilité linéaire en validant des entités d'interface utilisateur (UI) de l'application pour une conformité par rapport aux directives filtrées ;
le calcul d'une conformité d'accessibilité pondérée en attribuant des coefficients de pondération aux directives filtrées sur la base de la pluralité de besoins statutaires, de la complexité de mise en œuvre et de l'impact d'utilisateur final ;
le calcul de l'évaluation A sur la base de la distribution normale standard gaussienne de la table de vérité A comprenant la couverture d'accessibilité historique de la pluralité d'applications fournissant des conformités d'accessibilité pondérées de la pluralité d'applications ; et
la mise à jour de la table de vérité A avec l'évaluation A calculée fournissant une conformité d'accessibilité pondérée de l'application.

11. Système (100) selon la revendication 7, dans lequel le processeur (104) est configuré pour calculer l'évaluation U par :

l'identification de la liste de directives d'utilisabilité à respecter par l'application ;
le filtrage de directives applicables à l'application à partir de la liste de directives d'utilisabilité ;
l'obtention d'une conformité d'utilisabilité linéaire en validant l'application pour une conformité par rapport aux directives d'utilisabilité filtrées ;
le calcul d'une couverture d'utilisabilité pondérée en attribuant des coefficients de pondération aux directives filtrées sur la base de l'impact des directives filtrées sur l'organisation et l'utilisateur final dans l'accomplissement d'un ensemble de tâches avec un niveau optimal d'efficacité, d'efficience et de satisfaction ;
le calcul de l'évaluation U sur la base de la distribution normale standard gaussienne de la table de vérité U comprenant la couverture d'utilisabilité pondérée historique de la pluralité d'applications ; et
la mise à jour de la table de vérité U avec la couverture d'utilisabilité pondérée de l'application testée.

12. Système (100) selon la revendication 7, dans lequel le processeur (104) est configuré pour calculer l'évaluation S par :

le filtrage des vulnérabilités de sécurité applicables à l'application à partir de la liste de vulnérabilités de sécurité ;
l'attribution de coefficients de pondération aux vulnérabilités de sécurité filtrées sur la base de facteurs impactant l'organisation et de facteurs impactant la probabilité d'occurrence ;
l'obtention d'un score de risque de sécurité individuel et d'un score de risque de sécurité pondéré cumulatif de l'application sur la base de la résilience de l'application par rapport à chacune des vulnérabilités de sécurité filtrées ;
le calcul de l'évaluation S sur la base de la distribution normale standard gaussienne de la table de vérité S comprenant les scores de risque de sécurité pondérés cumulatifs historiques de la pluralité d'applications ; et

la mise à jour de la table de vérité S avec le score de risque de sécurité pondéré cumulatif de l'application.

13. Un ou plusieurs supports de stockage d'informations lisibles par machine non transitoires comprenant une ou plusieurs instructions qui, lorsqu'elles sont exécutées par un ou plusieurs processeurs matériels, amènent :

l'analyse d'une application pour calculer une évaluation de compatibilité de navigateur (C), une évaluation d'utilisabilité (U), une évaluation de sécurité d'application (S), une évaluation d'accessibilité (A) et une évaluation de performance d'application (P) fournissant une CX quantifiée associée à des dimensions C, U, S, A et P de l'application, dans lequel
l'évaluation C de l'application est basée sur une comparaison d'une pluralité de pages de l'application à travers une pluralité de navigateurs, sélectionnée sur la base d'une part de marché de chacun de la pluralité de navigateurs, pour identifier des anomalies d'éléments de la pluralité de pages sur la base d'au moins l'un d'une taille et d'un emplacement, dans lequel l'évaluation C est obtenue en utilisant une distribution normale standard gaussienne en mappant une couverture de compatibilité contextuelle de l'application par rapport à une table de vérité C comprenant des pourcentages de couverture de compatibilité cumulatifs historiques d'une pluralité d'applications analysées avant l'application, dans lequel la couverture de compatibilité contextuelle est calculée pour chaque navigateur parmi la pluralité de navigateurs sur la base de la part de marché, du nombre de pages validées et des anomalies ;

dans lequel la pluralité de navigateurs sont identifiés sur la base de la part de marché en utilisant des outils d'analyse de trafic Web ; et
dans lequel la pluralité de pages de l'application sont comparées à travers la pluralité de navigateurs en naviguant dans la pluralité de pages en utilisant un dispositif de suivi d'application pour s'adapter à des exigences de données à analyser à travers l'application pour la comparaison, dans lequel les exigences de données incluent des justificatifs d'identité de connexion, des valeurs de champ d'entrée, une acceptation de cookies, des sélections de liste déroulante ;
l'évaluation P de l'application est basée sur une mesure d'une pluralité de attributs de performance de l'application tels que perçus par un utilisateur final, dans lequel un schéma de notation pour chacun des attributs de performance parmi la pluralité d'attributs de performance est obtenu en utilisant un coefficient de pondération de chaque attribut de performance calibré sur la base d'une pluralité d'exigences spécifiques à l'application et de la distribution normale standard gaussienne en mappant chaque attribut de performance par rapport à une table de vérité P comprenant une plage de valeurs historiques de chaque attribut de performance collectées par une interrogation régulière de multiples applications, dans lequel la pluralité d'attributs de performance de l'application comprennent un temps jusqu'au premier octet, un premier changement visuel, un temps pour interagir, un temps de chargement et un temps de chargement complet d'une page Web de l'application ;
dans lequel chaque attribut de performance parmi la pluralité d'attributs de performance est mesuré par un évaluateur de performance en exécutant un test d'utilisateur unique sur l'application ; et

dans lequel une ligne de base pour une comparaison de la pluralité d'attributs de performance de l'application est déterminée par un agent d'interrogation qui collecte des attributs de performance par une interrogation régulière de multiples applications associées à des sites Web en utilisant un test automatisé non intrusif par rapport aux sites Web, dans lequel les attributs de performance collectés par l'agent d'interrogation sont similaires à la pluralité d'attributs de performance de l'application ;

l'évaluation A de l'application est basée sur une validation d'une pluralité d'entités sur la pluralité de pages de l'application pour se conformer à une liste de normes et

de directives d'accessibilité pondérées sur la base d'une pluralité de besoins statutaires, d'une complexité de mise en œuvre et d'un impact d'utilisateur final,

dans lequel l'évaluation A est obtenue en utilisant la distribution normale standard gaussienne en mappant une couverture d'accessibilité de l'application par rapport à une table de vérité A comprenant une couverture d'accessibilité historique de la pluralité d'applications analysées avant l'application, dans lequel la pluralité de pages de l'application sont naviguées en utilisant un dispositif de suivi d'accessibilité pour la pluralité d'entités, et dans lequel un évaluateur d'accessibilité effectue une validation en inspectant chaque élément individuel parmi la pluralité d'entités dans chaque page naviguée, pour se conformer à la liste de normes et de directives d'accessibilité ;

l'évaluation U de l'application est basée sur une validation de la pluralité d'entités sur les pages de l'application pour se conformer à une liste de directives d'utilisabilité pondérées sur la base de l'impact d'utilisateur final et de l'applicabilité à l'approche de mise en œuvre de l'application, dans lequel l'évaluation U est obtenue en utilisant la distribution normale standard gaussienne en mappant une couverture d'utilisabilité de l'application par rapport à une table de vérité U comprenant une couverture d'utilisabilité pondérée historique de la pluralité d'applications analysées avant l'application, dans lequel la validation est effectuée par un évaluateur d'utilisabilité en inspectant chaque page individuelle et les éléments de la page pour se conformer à la liste de directives d'utilisabilité couvrant des aspects de navigation, de contenu, de présentation et d'interaction ; et

dans lequel le dispositif de suivi d'application effectue une navigation à travers l'application et la pluralité de pages de l'application pour les exigences de données nécessaires pour analyser à travers la pluralité de pages ; et

l'évaluation S de l'application est basée sur une identification d'une liste de vulnérabilités de sécurité dans l'application par une validation de l'application pour être résiliente par rapport à la liste de vulnérabilités de sécurité prévalentes, pondérées sur la base d'un impact des vulnérabilités de sécurité sur une organisation et de la probabilité d'occurrence des vulnérabilités de sécurité, dans lequel l'évaluation S est obtenue en utilisant la distribution normale standard gaussienne en mappant un score de risque de sécurité cumulatif de l'application par rapport à une table de vérité S comprenant des scores de risque de sécurité pondérés cumulatifs historiques de la pluralité d'applications analysées avant l'application, dans lequel une validation est effectuée par un validateur de vulnérabilité effectuant une inspection d'éléments applicables dans l'application à travers des catégories comprenant une authentification, une autorisation, une gestion de session, une attaque côté client, une transmission et une injection non sécurisées par rapport à la liste de vulnérabilités de sécurité prévalentes conformément à des normes ; et

le calcul, par le processeur, d'une évaluation CX cumulative de l'application par :

l'attribution de coefficients de pondération à chacune de l'évaluation C, de l'évaluation U, de l'évaluation S, de l'évaluation A et de l'évaluation P sur la base de la pluralité d'exigences spécifiques à l'application ; et l'agrégation de l'évaluation C pondérée, de l'évaluation U pondérée, de l'évaluation S pondérée, de l'évaluation A pondérée et de l'évaluation P pondérée sur la base d'une fonction prédéfinie pour calculer l'évaluation CX cumulative.

FIG. 1

200

202

Analyzing an application to compute a browser compatibility (C)-rating, a usability (U)-rating, an application security (S)-rating, an accessibility (A)-rating and an application performance (P)-rating providing quantified CX associated with C, U , S, A and P dimensions of the application

204

Computing a cumulative CX-rating by:
allocating weightage coefficients to each of the C-rating, the U-rating, S-rating, the A-rating and the P-rating based on a predefined criteria ; and
aggregating the weighted C-rating, the weighted U-rating, the weighted S-rating, the weighted A-rating and the weighted P-rating based on a predefined function to compute the cumulative CX-rating

FIG. 2

MARKET SHARE
LISTENER:

Listen continuously to web
traffic analytics tools

302

APPLICATION CRAWLER:

Performs automated navigation
through a given application and its
pages, accommodating necessary
data requirements

304

COMPATIBILITY ASSESSOR:

Inspect each individual objects
within every page navigated for
comparison against multiple
browsers

306

COMPATIBILITY RATER

Compute real-time compatibility quality rating with right contextual
knowledge by considering not only the dynamic inputs but also inputs
based the compatibility quality of other industry applications

308

FIG. 3

| POLLING AGENT | PERFORMANCE ASSESSOR |
|---|---|
| Automated and regular collection of end-user facing performance parameters such as time to first byte, load time, full load time etc. and establish a baseline | Execute single user test on the application under test to measure the same performance parameters that are collected by the polling agent |

402                       404

406

| PERFORMANCE RATER |
|---|
| Computes real-time performance quality rating with right contextual knowledge by considering not only the dynamic performance measures of the application under test but also, based performance quality of other industry applications |

FIG. 4

ACCESSIBILITY CRAWLER

Automated navigation through a given application and its pages, accommodating necessary data requirements

502

ACCESSIBILITY ASSESSOR

inspects each individual objects within every page navigated for compliance against applicable accessibility guidelines

504

506

ACCESSIBILITY RATER

Compute real-time accessibility quality rating with right contextual knowledge by considering not only the dynamic inputs from above systems, but also based the weightage of various guidelines and accessibility quality of other industry applications

FIG. 5

**APPLICATION CRAWLER**

Automated navigation through a given application and its pages, accommodating necessary data requirements

602

**USABILITY ASSESSOR**

Inspect each individual page and its objects against applicable usability guidelines covering aspects of Navigation, Content, Presentation and Interaction)

604

606

**USABILITY RATER**
Compute real-time usability quality rating with right contextual knowledge by considering not only the dynamic inputs from above systems, but also based on the weightage of various guidelines and usability quality of other industry applications

**FIG. 6**

**VULNERABILITY VALIDATOR**

Automate inspection of applicable elements in an application, across categories such as authentication, authorization, session management and the like, wherein list of evolving vulnerabilities as defined by industry forums such as OWASP are included.

702

704

**SECURITY RATER**

Compute real-time security quality rating with right contextual knowledge by considering not only the business impact and probability of occurrences, but also based on the security quality levels of other industry applications in the industry

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201821018541

**Non-patent literature cited in the description**

- **DOMINIQUE RAVIART**. *TCS' CX Assurance Platform: a Bold Ambition for Digital Testing*, 19 July 2018, 1-2, https://research.nelson-hall.com/sourcing-expertise/it-services/?avpage-views=blog&type=-post&post_id=841